# EUROPÄISCHE PATENTANMELDUNG

(11) **EP 4 016 802 A1**
(43) Veröffentlichungstag der Anmeldung: **22.06.2022**
(21) Anmeldenummer: 20215477.9
(22) Anmeldetag: 18.12.2020
(51) Int. Cl.: H02K 1/14, H02K 1/27, H02K 15/03, H02K 21/22

(54) **STATOR-BLECHPAKET ZUR AUFNAHME MINDESTENS EINER SPULENEINHEIT, STATORSEGMENT, STATOR, ROTORSEGMENT, ROTOR, GENERATOR, WINDENERGIEANLAGE UND VERFAHREN ZUR HERSTELLUNG EINES ROTORSEGMENTS**

(71) Anmelder: Wobben Properties GmbH, 26607 Aurich (DE)
(72) Erfinder: FEITH, Manuel, 26427 Esens (DE); GIENGIEL, Wojciech, 26607 Aurich (DE); JÖCKEL, Stephal, 67259 Kleinniedesheim (DE); RECKTENWALD, Andreas, 66121 Saarbrücken (DE); MUIK, Tobias, 64625 Bensheim (DE)
(74) Vertreter: Eisenführ Speiser

(57) **Zusammenfassung**

Stator-Blechpaket (220) zur Aufnahme mindestens einer Spuleneinheit (260) eines Statorsegments (200) eines Stators (109) eines Generators (1), insbesondere eines segmentierten Stators (109) eines segmentierten Generators (1), für eine Windenergieanlage (100), umfassend mindestens einen Stator-Blechstapel (230) mit zwei oder mehr Blechstapeleinheiten (231), die in einer Umfangsrichtung (U) beabstandet zueinander angeordnet sind und mehrere erste Stator-Blechelemente (232) aufweisen, die in einer Axialrichtung (A) nebeneinander, insbesondere gestapelt, angeordnet sind; dadurch gekennzeichnet, dass der mindestens eine Stator-Blechstapel (230) mindestens ein zweites Stator-Blechelement (233), vorzugsweise zwei zweite Stator-Blechelemente (233), umfasst, welches von dem ersten Stator-Blechelement (232) verschieden ist und jeweils benachbarte Blechstapeleinheiten (231) der zwei oder mehr Blechstapeleinheiten (231) miteinander verbindet.

## Beschreibung

Die Erfindung betrifft einen Generator einer Windenergieanlage. Ferner betrifft die Erfindung ein Stator-Blechpaket zur Aufnahme mindestens einer Spuleneinheit eines Statorsegments eines Stators eines Generators für eine Windenergieanlage. Weiterhin betrifft die Erfindung ein Statorsegment eines Stators eines Generators für eine Windenergieanlage und einen Stator eines Generators für eine Windenergieanlage. Ferner betrifft die Erfindung ein Rotorsegment eines Rotors eines Generators für eine Windenergieanlage. Weiterhin betrifft die Erfindung einen Rotor eines Generators einer Windenergieanlage. Ferner betrifft die Erfindung eine Windenergieanlage. Ferner betrifft die Erfindung eine Windenergieanlage.

Eine Windenergieanlage ist eine Anlage, die kinetische Energie von Wind in elektrische Energie wandelt und in ein Stromnetz einspeist. Für die Wandlung der kinetischen Energie zur elektrischen Energie umfasst die Windenergieanlage einen Generator mit einem Rotor, der relativ zu einem Stator um eine Drehachse drehbar gelagert ist. In Abhängigkeit der Lage der Drehachse wird zwischen einer horizontalen und einer vertikalen Windenergieanlage unterschieden. Bei der horizontalen Windenergieanlage ist die Drehachse horizontal ausgerichtet. Bei der vertikalen Windenergieanlage ist die Drehachse vertikal ausgerichtet. Horizontale Windenergieanlagen sind auch als Horizontalachsen-Windenergieanlagen und vertikale Windenergieanlagen sind auch als Vertikalachsen-Windenergieanlagen bekannt.

Moderne Windenergieanlagen betreffen in der Regel sogenannte Horizontalachsen-Windenergieanlagen, bei denen die Drehachse im Wesentlichen horizontal angeordnet ist und die Rotorblätter eine im Wesentlichen senkrechte Rotorfläche überstreichen. Ferner weisen Windenergieanlagen eine Gondel auf, die um eine im Wesentlichen vertikale Achse drehbar auf einem Turm der Windenergieanlage angeordnet ist.

Der Wind bewirkt in einem Betriebszustand der Windenergieanlage eine Drehbewegung der Rotorblätter, die den Rotor eines Generators, welcher mit den Rotorblättern gekoppelt ist, antreiben. In dem Betriebszustand drehen die Rotorblätter und der Rotor relativ zu einem Stator des Generators. Bedingt durch die Relativbewegung zwischen Rotor und Stator erzeugt der (elektrische) Generator elektrische Energie. In dem Betriebszustand der Windenergieanlage ist die Windenergieanlage am Aufstellort aufgebaut und wird für die Wandlung der kinetischen Energie des Windes in elektrische Energie betrieben.

Windenergieanlagen können getriebelos oder mit einem Getriebe ausgeführt sein. Insbesondere getriebelose Windenergieanlagen weisen Generatoren mit einem großen Durchmesser auf. Es ist durchaus üblich, dass die Generatoren einen Durchmesser von 5 m und mehr aufweisen. Solche Generatoren können eine Masse von 150 t und mehr erreichen. Diese Generatoren können als sogenannte Innenläufer oder als sogenannte Außenläufer ausgeführt sein. Bei einem Innenläufer ist der mit den Rotorblättern rotierende Rotor des Generators innerhalb eines feststehenden Stators des Generators angeordnet. Bei einem Außenläufer ist der Rotor außerhalb des Stators angeordnet. Bei dem Außenläufer ist der Stator insbesondere innerhalb des Rotors, vorzugsweise in Bezug zu dem Rotor radial innenliegend angeordnet. Unabhängig von der Art des Generators sind Generatoren üblicherweise an der Gondel, insbesondere einem Maschinenträger, der Windenergieanlage befestigt.

In permanenterregten Generatoren, insbesondere in den skizzierten Baugrößen wirken große (permanent)magnetische und dynamische Kräfte. Insbesondere wirken diese Kräfte aufgrund des rotierenden Aufbaus des Generators schwingungsanregend. Ein derart zur Schwingung angeregter Generator kann Geräusche emittieren und insofern die Umwelt belasten.

Es ist deshalb eine Aufgabe der vorliegenden Erfindung, einen Generator für eine Windenergieanlage, ein Stator-Blechpaket eines Statorsegments eines Stators für einen Generator einer Windenergieanlage, ein Statorsegment eines Stators für einen Generator einer Windenergieanlage, einen Stator für einen Generator einer Windenergieanlage, ein Rotorsegment eines Rotors für einen Generator einer Windenergieanlage, einen Rotor für einen Generator einer Windenergieanlage, eine Windenergieanlage sowie ein Verfahren zur Herstellung eines Rotorsegments eines Generators bereitzustellen, die einen oder mehrere der genannten Nachteile beseitigen oder vermindern. Insbesondere ist es eine Aufgabe der vorliegenden Erfindung, eine Lösung bereitzustellen, die einen geräuschoptimierten Betrieb einer Windenergieanlage ermöglicht.

Gemäß einem ersten Aspekt wird die Aufgabe durch einen Generator, insbesondere durch einen segmentierten Generator, für eine Windenergieanlage nach Anspruch 1 gelöst.

Sofern nicht ausdrücklich abweichend ausgeführt, sind Angaben zu einer Axialrichtung, einer Umfangsrichtung und einer Radialrichtung in der Beschreibung in Bezug auf eine Drehachse des Generators zu verstehen. Die Axialrichtung entspricht einer Richtung parallel, d.h. entlang der Drehachse. Die Umfangsrichtung entspricht einer Richtung im Wesentlichen tangential zu der Drehachse. Die Radialrichtung entspricht einer Richtung radial zu der Drehachse.

Der segmentierte Generator für eine Windenergieanlage umfasst zwei oder mehrere Generatorsegmente. Die zwei oder mehr Generatorsegmente sind bevorzugt ringförmig angeordnet. Insbesondere sind die zwei oder mehr Generatorsegmente koaxial zu einer Drehachse des segmentierten Generators angeordnet. Insbesondere umfasst der segmentierte Generator einen segmentierten Rotor und einen segmentierten Stator. Der segmentierte Rotor umfasst zwei oder mehrere Rotorsegmente. Der segmentierte Stator umfasst zwei oder mehrere Statorsegmente.

Das jeweilige Generatorsegment bzw. das jeweilige Rotorsegment und/oder das jeweilige Statorsegment sind bezogen auf die Drehachse in einer Umfangsrichtung vorzugsweise teilringförmig ausgebildet. Insbesondere weisen das Generatorsegment bzw. das Rotorsegment und/oder das Statorsegment eine teilringförmige Geometrie auf. Ein Generatorsegment bzw. ein Rotorsegment und/oder ein Statorsegment, welches entsprechend teilringförmig ausgebildet ist oder eine teilringförmige Geometrie aufweist, erstreckt sich in der Umfangsrichtung mit einem bestimmten Bogengrad zwischen einer ersten und zweiten Trennschnittstelle.

Vorzugsweise erstrecken sich die zwei oder mehr Generatorsegmente bzw. die zwei oder mehr Rotorsegmente und/oder zwei oder mehr Statorsegmente mit demselben Bogengrad in der Umfangsrichtung. Insbesondere erstrecken sich die Generatorsegmente bzw. die Rotor- und/oder Statorsegmente in Abhängigkeit der Anzahl der jeweiligen Segmente nach folgender Formel: 360°/(Anzahl der Segmente). Hiernach erstrecken sich beispielsweise die Generatorsegmente eines segmentierten Generators, der zwei Generatorsegmente umfasst, in Umfangsrichtung jeweils um 180°, bei drei Generatorsegmenten wären es 120°, bei vier Generatorsegmenten wären es 90° usw. Dies kann entsprechend für die Rotorsegmente und/oder Statorsegmente gelten.

Es kann auch bevorzug sein, dass die Generatorsegmente, aus denen ein segmentierter Generator zusammengesetzt wird, sich in der Umfangsrichtung mit einem unterschiedlichen Bogengrad erstrecken. Beispielsweise kann ein segmentierter Generator aus drei Generatorsegmenten gebildet sein. Bei einem solchen segmentierten Generator kann sich beispielsweise ein erstes Generatorsegment in der Umfangsrichtung mit 180°, ein zweites Generatorsegment mit 120° und ein drittes Generatorsegment mit 60° erstrecken. Beliebig andere Erstreckungen in der Umfangsrichtung der Generatorsegmente sind denkbar, sofern sie zusammengesetzt in der Umfangsrichtung eine Erstreckung von 360° ergeben. Die Ausführungen zu dem Generatorsegment können entsprechend für ein Rotorsegment eines segmentierten Rotors und/oder ein Statorsegment eines segmentierten Stators gelten.

Die erste und zweite Trennschnittstelle erstrecken sich im Wesentlichen orthogonal zu der Umfangsrichtung. Insbesondere definieren die erste und zweite Trennschnittstelle eine erste und zweite Trennschnittstellenebene, innerhalb derer sich die Drehachse erstreckt. Insbesondere erstrecken sich die erste und/oder zweite Trennschnittstelle derart, dass die erste und/oder zweite Trennschnittstellenebene sich in Bezug zu der Drehachse in einer Radialrichtung erstrecken. Insbesondere schneiden sich die erste und/oder zweite Trennschnittstellenebene, die sich in Bezug zu der Drehachse in der Radialrichtung erstrecken, in einer Achse, die die Drehachse ist oder definiert. Insbesondere liegt die Drehachse in der ersten und/oder zweiten Trennschnittstellenebene, die sich in Bezug zu der Drehachse in der Radialrichtung erstrecken.

Die erste und/oder zweite Trennschnittstelle eines Generatorsegments weist eine Verbindungsvorrichtung auf. Die Verbindungsvorrichtung an der ersten und/oder zweiten Trennschnittstelle ist dazu ausgebildet, benachbarte Generatorsegmente, die zu einem segmentierten Generator angeordnet sind, miteinander zu verbinden. Die Verbindungsvorrichtung der ersten und/oder zweiten Trennschnittstelle ist insbesondere dazu ausgebildet, benachbarte Generatorsegmente mechanisch zu verbinden. Die mechanische Verbindung kann als kraftschlüssige und/oder stoffschlüssige und/oder formschlüssige Verbindung ausgebildet sein. Bevorzugt weisen die erste und/oder zweite Trennschnittstelle einen Flanschanschluss und/oder eine Schraubverbindung als Verbindungsvorrichtung auf zur Befestigung in der Umfangsrichtung benachbarter Generatorsegmente. Die Ausführungen zu dem Generatorsegment können entsprechend für ein Rotorsegment eines segmentierten Rotors und/oder ein Statorsegment eines segmentierten Stators gelten.

Insbesondere kann bevorzugt sein, dass das Rotorsegment, insbesondere dessen Magnetträgersegment, sich in der Umfangsrichtung zwischen der ersten und zweiten Trennschnittstelle mit einer Segmentlänge erstreckt, wobei das Rotorsegment bzw. das Magnetträgersegment eine Außenumfangsfläche aufweist mit einem ersten Trennschnittstellenabschnitt mit einer ersten Länge ausgehend von der ersten Trennschnittstelle in der Umfangsrichtung in Richtung der zweiten Trennschnittstelle; und einem zweiten Trennschnittstellenabschnitt mit einer zweiten Länge ausgehend von der zweiten Trennschnittstelle in der Umfangsrichtung in Richtung der ersten Trennschnittstelle; und einem Verbindungsabschnitt mit einer dritten Länge, die sich zwischen der ersten und zweiten Trennschnittstelle erstreckt; wobei im Bereich des ersten und zweiten Trennschnittstellenabschnitts an der Rotorumfangsfläche jeweils eine Versteifungsvorrichtung zur Versteifung des Magnetträgersegments angeordnet ist. Ergänzend oder alternativ kann bevorzugt sein, dass das Rotorsegment ein Versteifungsringsegment und/oder eine Versteifungsscheibe aufweist.

Ergänzend oder alternativ ist ferner bevorzugt, dass der segmentierte Generator als permanenterregter segmentierter Generator ausgebildet ist. In dieser bevorzugten Ausführung ist vorgesehen, dass an dem Rotor ein oder mehrere Permanentmagnete angeordnet sind. Ein Permanentmagnet, auch Dauermagnet genannt, ist ein Magnet, der ein gleichbleibendes Magnetfeld aufweist, welches nicht-wie bei Elektromagneten - durch eine elektrische Leistung erzeugt wird. Der Permanentmagnet umfasst ein oder besteht aus einem magnetisierten Material. Beispiele magnetisierter Materialien eines Permanentmagneten sind Legierungen aus Eisen, Cobalt, Nickel etc.

Vorzugsweise ist der segmentierte Generator als Außenläufer ausgebildet. Bei einem als Außenläufer ausgebildeten segmentierten Generator befindet sich der Stator bzw. segmentierte Stator gegenüber dem Rotor bzw. segmentierten Rotor in Bezug zu der Drehachse in der Radialrichtung innenliegend. Üblicherweise umschließt bei einem als Außenläufer ausgebildeten segmentierten Generator dessen radial außenliegender segmentierter Rotor den radial innenliegenden segmentierten Stator.

Mit der segmentierten Bauweise des Generators lassen sich transportbedingte Größenbeschränkungen eines Generators überwinden. Insbesondere können segmentierte Generatoren, durch den vereinzelten Transport der Generatorsegmente, auch zu schwierig zugänglichen Aufstellorten von Windenergieanlagen transportiert und auf dem Turm der Windenergieanlagen an der Gondel montiert werden. Insbesondere sind für die Montage eines segmentierten Generators keine großen und teuren Spezialkräne erforderlich. Vielmehr lassen sich die Generatorsegmente einzeln an der Gondel bzw. dem Maschinenträger mit einem kleinen Kran positionieren, der lediglich die Masse eines einzelnen Generatorsegments tragen sowie die Montagehöhe erreichen muss. Hierdurch lassen sich Kosten einsparen, die ansonsten für die wesentlich teureren großen Kräne anfallen. Ferner sind solch großen Kräne in der Regel nur beschränkt verfügbar, so dass man durch den segmentierten Generator hinsichtlich der Montagezeit und auch dem Montageort an Flexibilität gewinnt.

In dem Betriebszustand der Windenergieanlage ist der segmentierte Generator insbesondere an einer Lagereinheit befestigt. Die Lagereinheit weist einen feststehenden Lagerteil und einen drehenden bzw. drehbaren Lagerteil auf. Das drehbare Lagerteil ist gegenüber dem feststehenden Lagerteil um die Drehachse mittels Lagerelementen, beispielsweise Kugellagern, Wälzlagern, Tonnenlagern oder dergleichen drehbar gelagert. An dem feststehenden Lagerteil ist in dem Betriebszustand der segmentierte Stator befestigt. An dem drehbaren Lagerteil ist in dem Betriebszustand der segmentierte Rotor befestigt. Zur Befestigung des Stators weist die Lagereinheit an dem feststehenden Lagerteil vorzugsweise einen Stator-Grundkörperflansch auf. Zur Befestigung des Rotors weist die Lagereinheit an dem drehbaren Lagerteil vorzugsweise einen Rotor-Grundkörperflansch auf. Es ist zu verstehen, dass die Flanschfläche des Stator-Grundkörperflansches und des Rotor-Grundkörperflansches zueinander insbesondere mit dem Axialabstand beabstandet zueinander angeordnet sind.

Für weitere Vorteile, Ausführungsvarianten und Ausführungsdetails des erfindungsgemäßen segmentierten Generators und seinen Fortbildungen wird auch auf die nachfolgende Beschreibung zu den entsprechenden Merkmalen und Fortbildungen des Statorblechpakets, des Statorsegments, des Stators, des Rotorsegments, des Rotors, der Windenergieanlage und das Verfahren zur Herstellung eines Rotors verwiesen.

Gemäß einem weiteren Aspekt wird die Aufgabe durch ein Stator-Blechpaket zur Aufnahme mindestens einer Spuleneinheit eines Statorsegments eines Stators eines Generators für eine Windenergieanlage nach Anspruch 2 gelöst. Insbesondere wird die Aufgabe durch ein Stator-Blechpaket zur Aufnahme mindestens einer Spuleneinheit eines Statorsegments eines segmentierten Stators eines segmentierten Generators für eine Windenergieanlage gelöst.

Das Stator-Blechpaket erstreckt sich in der Umfangsrichtung im Wesentlichen tangential zu der Drehachse mit einer Stator-Blechpaketlänge. Das Stator-Blechpaket erstreckt sich in der Umfangsrichtung mit der Stator-Blechpaketlänge vorzugsweise zwischen einem ersten und zweiten Endabschnitt. Vorzugsweise erstreckt sich das Stator-Blechpaket in der Umfangsrichtung ringförmig oderteilringförmig. Das Stator-Blechpaket erstreckt sich ferner in der Axialrichtung parallel zu der Drehachse mit einer Stator-Blechpaketbreite. Das Stator-Blechpaket erstreckt sich in der Axialrichtung mit der Stator-Blechpaketbreite, insbesondere zwischen einem ersten und zweiten Stator-Druckblech. Das Stator-Blechpaket erstreckt sich in der Radialrichtung mit einer Stator-Blechpakethöhe. Das Stator-Blechpaket erstreckt sich mit der Stator-Blechpakethöhe zwischen einer radial innenliegenden Stator-Blechpaketinnenfläche und einer radial außenliegenden Stator-Blechpaketaußenfläche. Es ist bevorzugt, dass die Stator-Blechpaketlänge größer ist als die Stator-Blechpaketbreite. Ferner ist bevorzugt, dass die Stator-Blechpaketbreite größer ist als die Stator-Blechpakethöhe.

Das Stator-Blechpaket umfasst mindestens einen Stator-Blechstapel mit zwei oder mehr Blechstapeleinheiten. Das mindestens eine Stator-Blechpaket weist insbesondere mindestens zwei Stator-Blechstapel auf, wobei jeweils benachbarte Stator-Blechstapel der mindestens zwei Stator-Blechstapel in einer Axialrichtung parallel zueinander beabstandet angeordnet sind und jeweils einen Stator-Kühlungskanal mit einer Stator-Kühlungskanalbreite bilden, durch welchen ein Kühlungsmedium hindurchgeführt werden kann, insbesondere in einer Radialrichtung.

Die mindestens zwei Stator-Blechstapel weisen vorzugweise in der Axialrichtung dieselbe Stator-Blechstapelbreite auf. Vorzugsweise ist die Stator-Blechstapelbreite größer als die Stator-Kühlungskanalbreite. Insbesondere entspricht die Stator-Blechstapelbreite mindestens 110 %, 120 %, 150 %, 200 % oder 500 % der Stator-Kühlungskanalbreite. Es kann auch bevorzugt sein, dass die Stator-Blechstapelbreite der Stator-Kühlungskanalbreite entspricht. Ferner kann alternativ bevorzugt sein, dass die Stator-Blechstapelbreite kleiner ist als die Stator-Kühlungskanalbreite. Insbesondere entspricht die Stator-Blechstapelbreite mindestens 50 %, 60 %, 70 %, 80% oder 90 % der Stator-Kühlungskanalbreite. Insbesondere wir zwischen benachbarten Stator-Blechstapeln mindestens ein Abstandselement angeordnet, welches die Stator-Kühlungskanalbreite definiert. Vorzugsweise weist das mindestens ein Abstandselement eine Erstreckung in der Umfangsrichtung und/oder der Radialrichtung eine Erstreckung auf, die kleiner ist als eine Erstreckung des ersten und/oder zweiten Blechelements in der Umfangsrichtung und/oder Radialrichtung. Die Höhe des Stator-Kühlkanals entspricht insbesondere einer ersten Höhe eines ersten Abschnitts des Stator-Blechpakets. Die Länge des Stator-Kühlkanals entspricht bevorzugt der Länge des Stator-Blechpakets in der Umfangsrichtung. Vorzugsweise umfasst das Stator-Blechpaket mindestens 4, 8, 12, 16, 20, 24, 28, 32 oder mehr Stator-Kühlungskanäle.

Die zwei oder mehr Blechstapeleinheiten sind in einer Umfangsrichtung beabstandet zueinander angeordnet. Die zwei oder mehr Blechstapeleinheiten weisen mehrere erste Stator-Blechelemente auf. Die mehreren ersten Stator-Blechelemente sind in einer Axialrichtung nebeneinander, insbesondere gestapelt, angeordnet. Ferner umfasst der mindestens eine Stator-Blechstapel mindestens ein zweites Stator-Blechelement, vorzugsweise zwei zweite Stator-Blechelemente. Das mindestens eine zweite Stator-Blechelement ist von dem ersten Stator-Blechelement verschieden. Das mindestens eine zweite Stator-Blechelement verbindet jeweils benachbarte Blechstapeleinheiten der zwei oder mehr Blechstapeleinheiten miteinander.

Das erste und zweite Stator-Blechelement weisen in der Umfangsrichtung insbesondere einen oder mehrere erste Abschnitte auf, die sich in der Radialrichtung mit einer ersten Höhe erstrecken, und einen oder mehrere zweite Abschnitte auf, die sich in der Radialrichtung mit einer zweiten Höhe erstrecken. Die erste Höhe ist vorzugsweise von der zweiten Höhe verschieden. Insbesondere ist die zweite Höhe kleiner als die erste Höhe. Insbesondere erstreckt sich der erste Abschnitt in der Umfangsrichtung mit einer ersten Länge und der zweite Abschnitt mit einer zweiten Länge. Die erste Länge ist vorzugsweise von der zweiten Länge verschieden. Insbesondere ist die zweite Länge kleiner als die erste Länge. Vorzugsweise bilden in der Umfangsrichtung abwechselnd angeordnete erste und zweite Abschnitte ein erstes und/oder zweites Stator-Blechelement. Insbesondere erstreckt sich ein erster Abschnitt in der Umfangsrichtung zwischen zwei zweiten Abschnitten. Insbesondere erstreckt sich ein erster Abschnitt in der Umfangsrichtung zwischen zwei zweiten Abschnitten. Insbesondere bildet der erste Abschnitt gegenüber dem zweiten Abschnitt in der Radialrichtung einen Vorsprung oder Zapfen aus, der sich radial nach außen ausgehend von der Stator-Innenumfangsfläche erstreckt.

Es ist zu verstehen, dass das erste und zweite Stator-Blechelement derart angeordnet werden, dass die zwei oder mehr Blechstapeleinheiten des mindestens einen Stator-Blechstapels einen oder mehrere erste Abschnitte aufweisen, die sich in der Radialrichtung mit der ersten Höhe und in der Umfangsrichtung mit der ersten Länge erstrecken, und einen oder mehrere zweite Abschnitte aufweisen, die sich in der Radialrichtung mit der zweiten Höhe und in der Umfangsrichtung mit der zweiten Länge erstrecken. Insofern ist auch zu verstehen, dass der mindestens eine Stator-Blechstapel und das Stator-Blechpaket gemäß den zwei oder mehr Blechstapeleinheiten mindestens einen ersten und/oder mindestens einen zweiten Abschnitt aufweisen.

Das mindestens eine Stator-Blechpaket ist zur Aufnahme mindestens einer Spuleneinheit ausgebildet. Insbesondere ist eine Spuleneinheit derart an dem Stator-Blechpaket angeordnet, dass sich ein erster Abschnitt des Stator-Blechpakets in der Radialrichtung innerhalb der Spuleneinheit erstreckt. Vorzugsweise ist die Spuleneinheit derart an dem Stator-Blechpaket angeordnet, dass sich der erste Abschnitt des Stator-Blechpakets in der Radialrichtung durch Spuleneinheit hindurch erstreckt. Insbesondere ist die Spuleneinheit derart an dem Stator-Blechpaket angeordnet, dass sie auf einem, insbesondere auf zwei, zweiten Abschnitt/en des Stator-Blechpakets in der Radialrichtung aufliegt.

Die Ausbildung der Stator-Blechstapel mit in der Umfangsrichtung beabstandet zueinander angeordneten Blechstapeleinheiten hat den Vorteil, dass harmonische Schwingungen und insofern die Geräuschemission des Generators, insbesondere des segmentierten Generators, reduziert wird, der das beschriebene Stator-Blechpaket aufweist. Insbesondere beruht der Aspekt auf der Erkenntnis der Erfinder, dass die in der Umfangsrichtung benachbart zueinander angeordneten Blechstapeleinheiten mit einem solchen Abstand zueinander beabstandet sind, welcher dem Abstand zwischen in der Umfangsrichtung beabstandet zueinander angeordneten Stator-Blechpaketen entspricht. Dies führt in besonders vorteilhafter Weise zu einem gleichmäßigen Magnetfeld und insofern zu einer gleichmäßigen (vibroakustischen) Anregung des Generators, insbesondere des segmentierten Generators, und minimiert Störgeräusche.

Ferner hat diese Bauweise den Vorteil, dass sich in besonders einfacher und kostengünstiger Weise ein Stator-Blechpaket und insofern auch ein Statorsegment, Stator oder Generator herstellen lässt, der besonders geräuschoptimiert, insbesondere geräuschminimiert, betrieben werden kann.

Das erfindungsgemäße Stator-Blechpaket und dessen Fortbildungen weisen Merkmale auf, die sie insbesondere dafür geeignet machen für ein erfindungsgemäßes Statorsegment und/oder einen erfindungsgemäßen Stator und/oder einen erfindungsgemäßen Generator und/oder eine erfindungsgemäße Windenergieanlage sowie den jeweiligen Fortbildungen verwendet zu werden. Für weitere Vorteile, Ausführungsvarianten und Ausführungsdetails des erfindungsgemäßen Stator-Blechpakets und dessen Fortbildungen wird auch auf die zuvor erfolgte Beschreibung zu den entsprechenden Merkmalen und Fortbildungen des Generators und die nachfolgende Beschreibung zu den entsprechenden Merkmalen und Fortbildungen des Statorsegments, des Stators, des Rotorsegments, des Rotors, der Windenergieanlage und des Verfahrens zur Herstellung eines Rotorsegments verwiesen.

In einer bevorzugten Ausführungsform des Stator-Blechpakets ist vorgesehen, dass die ersten Stator-Blechelemente der mehreren ersten Stator-Blechelemente in der Umfangsrichtung eine erste Blechlänge aufweisen und das mindestens eine zweite Stator-Blechelement in der Umfangsrichtung eine zweite Blechlänge aufweist, wobei die zweite Blechlänge sich im Vergleich zu der ersten Blechlänge in der Umfangsrichtung mindestens doppelt so weit erstreckt. Insbesondere ist bevorzugt, dass die zweite Blechlänge der zweifachen ersten Blechlänge plus dem Abstand zwischen in der Umfangsrichtung benachbart angeordneten Blechstapeleinheiten entspricht.

Dies hat den Vorteil, dass sich in besonders einfacher und kostengünstiger Weise ein Stator-Blechpaket und insofern auch ein Statorsegment, Stator oder Generator herstellen lässt, der besonders geräuschoptimiert, insbesondere geräuschminimiert, betrieben werden kann.

Ergänzend oder alternativ ist bevorzugt, dass die ersten Stator-Blechelemente in der Axialrichtung eine erste Blechbreite aufweisen und das mindestens eine zweite Stator-Blechelement in der Axialrichtung eine zweite Blechbreite aufweist, die der ersten Blechbreite entspricht. Es kann auch bevorzugt sein, dass die erste Blechbreite von der zweiten Blechbreite verschieden ist. Insbesondere kann die erste Blechbreite größer oder kleiner sein als die zweite Blechbreite.

Ein Stator-Blechpaket aufweisend erste und zweite Blechelemente, wobei die ersten und zweite Blechbreite gleich sind, hat den Vorteil, dass sich in besonders einfacher und kostengünstiger Weise ein Stator-Blechpaket und insofern auch ein Statorsegment, Stator oder Generator herstellen lässt, der besonders geräuschoptimiert, insbesondere geräuschminimiert, betrieben werden kann. Ein Stator-Blechpaket aufweisend erste und zweite Blechelemente, wobei die ersten und zweite Blechbreite verschieden sind, haben den Vorteil, dass sich das Stator-Blechpaket insbesondere an die individuellen Anforderungen des herzustellenden Generators angepasst werden können.

Gemäß einer ferner bevorzugten Fortbildung des Stator-Blechpakets ist vorgesehen, dass die zwei oder mehr Blechstapeleinheiten, in der Umfangsrichtung mit einem Blechstapelabstand beabstandet zueinander angeordnet sind. Der Blechstapelabstand beträgt mehr als 0 mm, insbesondere mindestens 0,5 mm, 1 mm, 1,5 mm, 2 mm, 3 mm, 4 mm oder 5 mm, und/oder maximal 10 mm, 7,5 mm, 5 mm, 3 mm, 2 mm oder 1 mm.

Ferner ist bevorzugt, dass der Stator-Blechstapel sich in Umfangsrichtung mit einem Bogenwinkel um mindestens 10° und maximal um 20°, vorzugsweise um 15° ± 1°, erstreckt; und/oder die mehreren ersten Stator-Blechelemente sich in Umfangsrichtung mit einem Bogenwinkel um mindestens 2,5° und maximal um 7,5°, vorzugsweise um 5° ± 1°, erstrecken; und/oder das mindestens ein zweite Stator-Blechelement sich in Umfangsrichtung mit einem Bogenwinkel um mindestens 7,5° und maximal um 12,5°, vorzugsweise um 10° ± 1°, erstreckt.

Ergänzend oder alternativ ist vorzugsweise vorgesehen, dass das Stator-Blechpaket mindestens zwei Stator-Blechstapel umfasst, wobei benachbarte Stator-Blechstapel der mindestens zwei Stator-Blechstapel in der Axialrichtung beabstandet zueinander angeordnet sind.

Die Ausbildung der Stator-Blechstapel mit beabstandet zueinander angeordneten Blechstapeleinheiten hat den Vorteil, dass harmonische Schwingungen und insofern die Geräuschemission des Generators, insbesondere des segmentierten Generators, reduziert wird, der das beschriebene Stator-Blechpaket aufweist. Insbesondere beruht der Aspekt auf der Erkenntnis der Erfinder, dass die in der Umfangsrichtung benachbart zueinander angeordneten Blechstapeleinheiten mit einem solchen Abstand zueinander beabstandet sind, welcher dem Abstand zwischen in der Umfangsrichtung beabstandet zueinander angeordneten Stator-Blechpaketen entspricht. Dies führt in besonders vorteilhafter Weise zu einer gleichmäßigen Anregung des Generators, insbesondere des segmentierten Generators, und minimiert Störgeräusche.

Ein solches Stator-Blechpaket hat den Vorteil, dass sich in besonders einfacher und kostengünstiger Weise ein Stator-Blechpaket und insofern auch ein Statorsegment, Stator oder Generator herstellen lässt, der besonders geräuschoptimiert, insbesondere geräuschminimiert, betrieben werden kann.

Gemäß einem weiteren Aspekt wird die Aufgabe durch ein Statorsegment eines Stators eines Generators für eine Windenergieanlage gelöst. Insbesondere wird die Aufgabe durch ein Statorsegment eines segmentierten Stators eines segmentierten Generators für eine Windenergieanlage gelöst.

Das Statorsegment umfasst ein Spulenträgersegment mit einer ringförmigen oder teilringförmigen Geometrie und einer Stator-Umfangsstruktur. Ferner umfasst das Statorsegment mindestens ein Stator-Blechpaket, das zur Aufnahme mindestens einer Spuleneinheit ausgebildet ist und an der Stator-Umfangsstruktur angeordnet ist. Insbesondere weist das mindestens ein Stator-Blechpaket einzelne oder alle Merkmale des zuvor beschriebenen Stator-Blechpakets auf und verwirklicht dessen Vorteile und Effekte.

Insbesondere weist das Statorsegment eine erste und zweite Trägerplatte auf. Die erste und zweite Trägerplatte sind in der Axialrichtung beabstandet zueinander angeordnet. Vorzugsweise verbindet die Stator-Umfangsstruktur die erste und zweite Trägerplatte miteinander. Die Stator-Umfangsstruktur ist beispielsweise eine Anordnung von einer oder mehreren Axialstreben, die eine Haupterstreckungsrichtung im Wesentlichen entlang der Drehachse in der Axialrichtung aufweisen. Mehrere Axialstreben sind insbesondere in Umfangsrichtung beabstandet zueinander, vorzugsweise äquidistant, angeordnet. Es ist zu verstehen, dass Spulenträgersegment in bevorzugter Weise die erste und zweite Trägerplatte und/oder die Stator-Umfangsstruktur integral, insbesondere einstückig, ausbildet. Vorzugsweise ist an der Stator-Umfangsstruktur mindestens ein Stator-Blechpaket zur Aufnahme mindestens einer Spuleneinheit angeordnet.

Das Statorsegment erstreckt sich bevorzugt in der Radialrichtung zwischen einem radial innenliegenden Flansch zur Befestigung des Statorsegments an einem Stator-Grundkörperflansch der Lagereinheit und einem radial außenliegenden Spulenträgersegment. Insbesondere ist das Statorsegment als Schalenstruktur ausgebildet. Vorzugsweise erstreckt sich das Statorsegment pyramidenstumpfförmig von dem Flansch zu dem zu dem radial außenliegenden Spulenträgersegment, wobei der Querschnitt des Statorsegments von dem Flansch zu dem radial außenliegenden Spulenträgersegment zunimmt. Insbesondere bildet das Statorsegment, vorzugsweise integral, einen Stator-Tragabschnitt aus, der sich ausgehend von dem radial innenliegenden Flansch zu dem radial außenliegenden Spulenträgersegment erstreckt.

Das Statorsegment umfasst ferner eine Befestigungsvorrichtung zur Befestigung des mindestens ein Stator-Blechpakets an dem Spulenträgersegment. Die Befestigungsvorrichtung ist als Klemmvorrichtung ausgebildet zur kraft- und/oder formschlüssigen Verbindung des mindestens einen Stator-Blechpakets an dem Spulenträgersegment. Vorzugsweise ist die Befestigungsvorrichtung zur kraft- und/oder formschlüssigen Verbindung des mindestens einen Stator-Blechpakets an dem Spulenträgersegment in der Radialrichtung und/oder der Umfangsrichtung und/oder der Axialrichtung ausgebildet. Insbesondere ist die Befestigungsvorrichtung an der Stator-Umfangsstruktur, vorzugsweise den Axialstreben der Stator-Umfangsstruktur angeordnet und/oder befestigt.

Die Befestigungsvorrichtung gemäß diesem Aspekt hat den Vorteil, dass diese sich besonders einfach und kostengünstig herstellen lässt und einen Betrieb des Generators mit minimierter Vibration, also geräuschoptimiert ermöglicht. Insbesondere hat diese Befestigungsvorrichtung den Vorteil, dass diese einen besonders leichten und schnellen Austausch eines Stator-Blechpakets ermöglicht. Insofern kann ein solcher Generator in besonders vorteilhafter Weise kostengünstig und geräuscharm betrieben werden.

Das erfindungsgemäße Statorsegment und dessen Fortbildungen weisen Merkmale auf, die sie insbesondere dafür geeignet machen für einen erfindungsgemäßen Stator und/oder einen erfindungsgemäßen Generator und/oder eine erfindungsgemäße Windenergieanlage sowie den jeweiligen Fortbildungen verwendet zu werden. Für weitere Vorteile, Ausführungsvarianten und Ausführungsdetails des erfindungsgemäßen Statorsegments und dessen Fortbildungen wird auch auf die zuvor erfolgte Beschreibung zu den entsprechenden Merkmalen und Fortbildungen des Generators und des Stator-Blechpakets und die nachfolgende Beschreibung zu den entsprechenden Merkmalen und Fortbildungen des Stators, des Rotorsegments, des Rotors, der Windenergieanlage und des Verfahrens zur Herstellung eines Rotorsegments verwiesen.

Nach einer bevorzugten Ausführungsform des Statorsegments ist vorgesehen, dass in der Umfangsrichtung benachbart angeordnete Stator-Blechpakete an der Stator-Umfangsstruktur mit einem Blechpaketabstand zueinander beabstandet angeordnet sind; wobei bevorzugt der Blechpaketabstand dem Blechstapelabstand entspricht; oder der Blechpaketabstand größer ist als der Blechstapelabstand; oder der Blechpaketabstand kleiner ist als der Blechstapelabstand.

Die Ausbildung des Statorsegments nach dieser bevorzugten Fortbildung hat den Vorteil, dass harmonische Schwingungen und insofern die Geräuschemission des Generators, insbesondere des segmentierten Generators, reduziert wird, der das beschriebene Statorsegment aufweist. Insbesondere beruht der Aspekt auf der Erkenntnis der Erfinder, dass die in der Umfangsrichtung benachbart zueinander angeordneten Statorsegment mit einem solchen Abstand zueinander beabstandet sind, welcher dem Abstand zwischen in der Umfangsrichtung beabstandet zueinander angeordneten Stator-Blechstapeleinheiten entspricht. Dies führt in besonders vorteilhafter Weise zu einer gleichmäßigen Anregung des Generators, insbesondere des segmentierten Generators, und minimiert Störgeräusche.

Ferner ist bevorzugt, dass die Befestigungsvorrichtung mindestens eine erste Klemmleiste und/oder mindestens eine zweite Klemmleiste umfasst. Die erste und/oder zweite Klemmleiste ist insbesondere trapezförmig ausgebildet. Die erste und/oder zweite Klemmleiste sind zur kraft- und/oder formschlüssigen Befestigung der Befestigungsvorrichtung an dem mindestens einen Stator-Blechpaket ausgebildet. Vorzugsweise ist die erste Klemmleiste von der zweiten Klemmleiste verschieden.

Alternativ oder ergänzend weist die mindestens eine erste und/oder zweite Klemmleiste mindestens eine Kontaktfläche auf. Die mindestens eine Kontaktfläche der mindestens einen ersten und/oder zweiten Klemmleiste ist zur Befestigung der ersten und/oder zweiten Klemmleiste an dem mindestens einen Stator-Blechpaket ausgebildet. Vorzugsweise weist die Kontaktfläche eine oder mehrere punkt- und/oder linienförmige Kontakterhebungen auf, die ausgebildet sind, eine Klemmverbindung mit dem Stator-Blechpaket über einen Punkt- und/oder Linienkontakt herzustellen.

Alternativ oder ergänzend weist die Befestigungsvorrichtung einen Befestigungsanschluss zur Befestigung der Befestigungsvorrichtung an dem Spulenträgersegment auf. Insbesondere weist die Befestigungsvorrichtung einen Befestigungsanschluss zur Befestigung der Befestigungsvorrichtung an der Stator-Umfangsstruktur auf.

Alternativ oder ergänzend umfasst der Befestigungsanschluss mindestens ein Spannelement zur kraftschlüssigen und/oder formschlüssigen Verbindung der mindestens einen ersten und/oder zweiten Klemmleiste an dem Spulenträgersegment. Insbesondere umfasst der Befestigungsanschluss mindestens ein Spannelement zur kraftschlüssigen und/oder formschlüssigen Verbindung der mindestens einen ersten und/oder zweiten Klemmleiste an der Stator-Umfangsstruktur.

Ferner kann bevorzugt sein, dass die Befestigungsvorrichtung mindestens ein Dämpferelement zur Anordnung zwischen der Befestigungsvorrichtung und dem Stator-Blechpaket aufweist. Insbesondere ist bevorzugt, dass die Befestigungsvorrichtung mindestens ein Dämpferelement zur Anordnung zwischen der Befestigungsvorrichtung und der mindestens einen ersten und/oder zweiten Klemmleiste aufweist. Mit dem Dämpferelement lässt sich die Vibration des Generators und insofern die Geräuschemission zusätzlich reduzieren.

Ferner kann nach einer bevorzugten Fortbildung des Statorsegments das mindestens eine Stator-Blechpaket mindestens eine erste Befestigungsnut und/oder mindestens eine zweite Befestigungsnut umfassen. Insbesondere ist die mindestens eine erste Befestigungsnut eine trapezförmige Befestigungsnut. Insbesondere ist die mindestens eine zweite Befestigungsnut eine teil-trapezförmige Befestigungsnut. Vorzugsweise ist die erste und/oder zweite Befestigungsnut zur Aufnahme der Befestigungsvorrichtung ausgebildet. Insbesondere ist die erste und/oder zweite Befestigungsnut zur Aufnahme jeweils einer ersten und/oder zweiten Klemmleiste der mindestens einen ersten und/oder zweiten Klemmleiste ausgebildet. Vorzugsweise ist die erste Befestigungsnut von der zweiten Befestigungsnut verschieden.

Vorzugsweise bildet das Stator-Blechpaket die erste und/oder zweite Befestigungsnut an der radial innenliegenden Stator-Stator-Blechpaketinnenfläche aus. Insbesondere bildet das Stator-Blechpaket die zweite Befestigungsnut an dem ersten und/oder zweiten Endabschnitt des Stator-Blechpakets aus.

Alternativ oder ergänzend kann vorgesehen sein, dass die mindestens eine erste und/oder zweite Befestigungsnut vorzugsweise mindestens eine Nutwand als Kontaktfläche zur Befestigung der Befestigungsvorrichtung an der mindestens einen ersten und/oder zweiten Befestigungsnut aufweist. Vorzugsweise weist die Nutwand eine oder mehrere punkt- und/oder linienförmige Kontakterhebungen auf. Insbesondere sind der eine oder die mehreren punkt- und/oder linienförmigen Kontakterhebungen ausgebildet, eine Klemmverbindung mit der Befestigungsvorrichtung über einen Punkt- und/oder Linienkontakt herzustellen.

Solche Befestigungsvorrichtungen lassen sich besonders einfach und kostengünstig herstellen und haben ferner den Vorteil, dass sich das Stator-Blechpaket besonders einfach an dem Spulenträgersegment befestigen lässt. Insbesondere lässt sich das Stator-Blechpaket lösbar an dem Spulenträgersegment befestigen, was bei erforderlichen Wartungs- und Instandhaltungsarbeiten einen schnellen Austausch des auszutauschenden Stator-Blechpakets ermöglicht. Gleichzeigt hat die Befestigungsvorrichtung den Vorteil, dass sich das Stator-Blechpaket an dem Spulenträgersegment im Wesentlichen ohne nennenswertes Setzen befestigen lässt, was insofern einen geräuschminimierten Betrieb des Generators ermöglicht. Insbesondere lässt sich der Generator geräuschminimiert betreiben, ohne dass hierzu die Befestigungsvorrichtung, beispielsweise Schraubenverbindungen, nach einer bestimmten Betriebszeit nachgezogen werden müssten, um einen geräuschminimierten Betrieb des Generators auch auf Dauer zu gewährleisten.

Gemäß einem weiteren Aspekt wird die Aufgabe durch einen Stator eines Generators einer Windenergieanlage nach Anspruch 7.

Der Stator ist insbesondere ein segmentierter Stator. Vorzugsweise ist der Stator ein Stator eines segmentierten Generators. Der Stator umfasst ein ringförmig ausgebildetes Statorsegment oder mehrere teilringförmig ausgebildete Statorsegmente, die ringförmig angeordnet sind. Ein solcher Stator umfasst ein erfindungsgemäßes Statorsegment und/oder Merkmale einer der zuvor beschriebenen Ausführungsformen des Statorsegments oder einer Kombination daraus.

Für weitere Vorteile, Ausführungsvarianten und Ausführungsdetails des erfindungsgemäßen Stators und dessen Fortbildungen wird auch auf die vorangehende Beschreibung zu den entsprechenden Merkmalen und Fortbildungen des Generators, des Generators, des Stator-Blechpakets und des Statorsegments sowie den nachstehenden Beschreibungen des Rotorsegments, des Rotors, der Windenergieanlage und des Verfahrens zur Herstellung eines Rotors verwiesen.

Gemäß einem weiteren Aspekt wird die Aufgabe durch ein Rotorsegment eines Rotors eines Generators für eine Windenergieanlage nach Anspruch 8. Insbesondere wird die Aufgabe durch ein Rotorsegment eines segmentierten Rotors eines segmentierten Generators für eine Windenergieanlage gelöst.

Das Rotorsegment umfasst ein Magnetträgersegment mit einer ringförmigen oder teilringförmigen Geometrie und einer Rotor-Innenumfangsfläche. Ferner umfasst das Rotorsegment mindestens ein Rotor-Blechpaket, das zur Aufnahme mindestens einer Magneteinheit ausgebildet ist und an der Rotor-Innenumfangsfläche angeordnet ist. Ferner umfasst das Rotorsegment mindestens eine Magneteinheit, die an dem Rotor-Blechpaket angeordnet ist. Die mindestens eine Magneteinheit ist stoffschlüssig mit dem Rotor-Blechpaket verbunden. Die stoffschlüssige Verbindung ist insbesondere eine adhäsive und/oder klebende Verbindung.

Vorzugsweise verbindet eine Vergussmasse, die die Magneteinheit zumindest teilweise umschließt, die Magneteinheit mit dem Rotor-Blechpaket. Vorzugsweise ist die Vergussmasse zwischen dem Rotor-Blechpaket der mindestens einen Magneteinheit angeordnet. Vorzugsweise erstreckt sich die Vergussmasse zwischen dem Rotor-Blechpaket und der mindestens einen Magneteinheit in der Radialrichtung mit einer Vergussmassehöhe. Vorzugsweise erstreckt sich die Vergussmasse zwischen dem Rotor-Blechpaket und der mindestens einen Magneteinheit mit einer Vergussmassehöhe von mindestens 0,05 mm, 0,1 mm, 0,2 mm, 0,3 mm, 0,4 mm, 0,5 mm, 1 mm, 1,5 mm, 2 mm, 3 mm, 4 mm oder 5 mm. Insbesondere erstreckt sich die Vergussmasse zwischen dem Rotor-Blechpaket und der mindestens einen Magneteinheit mit einer Vergussmassehöhe von maximal 10 mm, 7,5 mm, 5 mm, 4, mm, 3 mm, 2 mm, 1,5 mm, 1 mm, 0,5 mm, 0,4 mm, 0,3mm, 0,2 mm oder 0,1 mm.

Insbesondere weist die Vergussmasse dämpfende Eigenschaften auf. Vorzugsweise nimmt die Dämpfungswirkung der Vergussmasse mit zunehmender Vergussmassehöhe zwischen dem Rotor-Blechpaket und der mindestens einen Magneteinheit zu. Insbesondere hat die Vergussmasse besser Dämpfungseigenschaften als das Rotor-Blechpaket und/oder die mindestens eine Magneteinheit.

Ferner ist bevorzugt, dass die Vergussmasse die mindestens eine Magneteinheit umschließt. Insbesondere umhüllt die Vergussmasse die mindestens eine Magneteinheit. Insbesondere ist die mindestens eine Magneteinheit von der Vergussmasse derart umschlossen, dass die Vergussmasse die mindestens eine Magneteinheit vor Korrosion schützt.

Insbesondere ist die Vergussmasse ein Gießharz und/oder ein Epoxidharz und/oder ein Laminierharz. Es kann auch bevorzugt sein, dass die Vergussmasse ein Polyurethan und/oder ein Silikon umfasst.

Das Rotorsegment erstreckt sich bevorzugt in der Radialrichtung zwischen einem radial innenliegenden Flansch zur Befestigung des Rotorsegments an einem Rotor-Grundkörperflansch einer Lagereinheit und dem radial außenliegenden Magnetträgersegment. Vorzugsweise erstreckt sich das Rotorsegment mit einem Rotor-Tragabschnitt zwischen dem radial innenliegenden Flansch zur Befestigung des Rotorsegments an dem Rotor-Grundkörperflansch der Lagereinheit und dem radial außenliegenden Magnetträgersegment. Es ist zu verstehen, dass das Rotorsegment mehrteilig oder integral ausgebildet sein kann. Insbesondere ist zu verstehen, dass das Rotorsegment integral aus einzelnen miteinander verschweißten Rotorsegmenten ausgebildet sein kann.

Die stoffschlüssige Verbindung, insbesondere die Verbindung mit der Vergussmasse, der Magneteinheiten an dem Rotor-Blechpaket hat den Vorteil, dass diese einen besonders geräuscharmen Betrieb des Generators ermöglichen. Insbesondere wirkt die Vergussmasse dämpfend, was mögliche Geräuschemissionen des Generators im Betrieb zusätzlich minimiert. Ferner lässt sich ein solches Rotorsegment besonders kostengünstig herstellen.

Das erfindungsgemäße Rotorsegment und dessen Fortbildungen weisen Merkmale auf, die sie insbesondere dafür geeignet machen für einen erfindungsgemäßen Generator und/oder eine erfindungsgemäße Windenergieanlage und/oder ein erfindungsgemäßes Verfahren sowie den jeweiligen Fortbildungen verwendet zu werden. Für weitere Vorteile, Ausführungsvarianten und Ausführungsdetails des erfindungsgemäßen Rotorsegments und dessen Fortbildungen wird auch auf die zuvor erfolgte Beschreibung zu den entsprechenden Merkmalen und Fortbildungen des Generators, des Stator-Blechpakets, des Statorsegments, des Stators und die nachfolgende Beschreibung zu den entsprechenden Merkmalen und Fortbildungen des Rotors, der Windenergieanlage und des Verfahrens zur Herstellung eines Rotorsegments verwiesen.

Nach einer bevorzugten Fortbildung umfasst das Rotorsegment mindestens eine Magnetabdeckungsvorrichtung, die mit dem Rotor-Blechpaket verbunden ist, wobei jeweils zwischen einer Magnetabdeckungsvorrichtung und dem Rotor-Blechpaket eine Magneteinheit angeordnet ist; wobei insbesondere das Rotor-Blechpaket mindestens eine erste und/oder zweite Klemmnut aufweist zur kraft- und/oder formschlüssigen Verbindung der Magnetabdeckungsvorrichtung an dem Rotor-Blechpaket, wobei vorzugsweise die erste Klemmnut von der zweiten Klemmnut verschieden ist.

Vorzugsweise ist die Magneteinheit an der Magnetabdeckungsvorrichtung angeordnet. Insbesondere liegt die Magneteinheit zumindest abschnittsweise an der Magnetabdeckungsvorrichtung an. Ferner kann bevorzugt sein, dass zwischen der Magneteinheit und der Magnetabdeckungsvorrichtung sich abschnittsweise Vergussmasse erstreckt. Insbesondere ist bevorzugt die mindestens eine Magnetabdeckungsvorrichtung als Form zur Herstellung eines Rotorsegments ausgebildet. Insbesondere ist die mindestens eine Magnetabdeckungsvorrichtung als Form zum Vergießen der Vergussmasse zwischen der Magneteinheit, der mindestens einen Magnetabdeckungsvorrichtung und/oder dem Rotor-Blechpaket ausgebildet.

Die Magnetabdeckungsvorrichtung ermöglicht eine besonders kostengünstige Herstellung bzw. Montage der Magneteinheiten an dem Rotor-Blechpaket. Insbesondere ermöglicht die Magnetabdeckungsvorrichtung eine Anordnung der Magneteinheiten an dem Rotor-Blechpaket, die einen besonders geräuschoptimierten Betrieb eines Generators ermöglicht. Ferner schützt die Magnetabdeckungsvorrichtung die Magneteinheiten vor mechanischen Einflüssen und Korrosion.

Gemäß einer ferner bevorzugten Ausführungsform des Rotorsegments ist vorgesehen, dass die mindestens eine Magneteinheit mindestens einen Magnetblock umfasst. Insbesondere ist der Magnetblock ein quaderförmiger Magnetblock. Der Magnetblock weist zumindest auf einer Magnetblockseite Nuten auf. Die Nuten sind ausgebildet, die Vergussmasse zwischen dem Magnetblock und der Rotor-Innenumfangsfläche zu verteilen. Vorzugsweise weist der mindestens einen Magnetblock eine Axialnut in einer Axialrichtung und/oder eine Umfangsnut in einer Umfangsrichtung und/oder eine Diagonalnut, die diagonal zu der Axialrichtung und der Umfangsrichtung verläuft, auf. Diese Nuten in den Magnetblöcke führen zu einer verbesserten und langlebigeren Verbindung zwischen dem Rotor-Blechpaket und den Magneteinheiten.

Ferner ist bevorzugt, dass das Rotorsegment mehrere Magneteinheiten aufweist. Die mehreren Magneteinheiten sind an der Rotor-Innenumfangsfläche in der Umfangsrichtung beabstandet zueinander angeordnet. Insbesondere sind die mehreren Magneteinheiten an der Rotor-Innenumfangsfläche in der Umfangsrichtung äquidistant angeordnet. Vorzugsweise sind in der Axialrichtung zwei oder mehrere Magneteinheiten der mehreren Magneteinheiten beabstandet zueinander angeordnet. Die in der Axialrichtung benachbart angeordneten Magneteinheiten definieren einen Umfangsspalt mit einer Spaltbreite. Insbesondere umfassen die Magneteinheiten eine, zwei oder mehr Magnetreihen. Vorzugsweise sind die Magnetreihen in der Umfangsrichtung zueinander beabstandet angeordnet. Insbesondere sind die Magnetreihen in der Umfangsrichtung äquidistant zueinander angeordnet. Insbesondere umfasst eine Magnetreihe einen oder mehrere Magnetblöcke. Vorzugsweise sind mehrere Magnetblöcke in der Axialrichtung nebeneinander angeordnet und bilden eine Magnetreihe.

Eine solche bevorzugte Ausführung des Rotorsegments führt zu einer vorteilhaften gleichmäßigen vibroakustischen Anregung des Generators und minimiert Störgeräusche. Gemäß dieser Fortbildung lässt sich ein Rotorsegment für einen im Betrieb geräuschoptimierten Generator ferner besonders kostengünstig herstellen.

Nach einer weiteren bevorzugten Fortbildung des Rotorsegments ist das Rotor-Blechpaket stoffschlüssig mit dem Magnetträgersegment verbunden. Insbesondere ist das Rotor-Blechpaket mit einer Schweißverbindung mit dem Magnetträgersegment verbunden. Ergänzend oder alternativ kann bevorzugt sein, dass das Rotor-Blechpaket an einer Rotor-Blechpaketinnenumfangsfläche mindestens einen Vergussmassekanal aufweist. Vorzugsweise ist der mindestens eine Vergussmassekanal als Nut ausgebildet. Insbesondere weist der mindestens eine Vergussmassekanal einen Axialkanal in einer Axialrichtung und/oder einen Umfangskanal in einer Umfangsrichtung und/oder einen Diagonalkanal, der diagonal zu der Axialrichtung und der Umfangsrichtung verläuft, auf.

Die stoffschlüssige, insbesondere die Schweißverbindung, zwischen dem Rotor-Blechpaket und dem Magnetträgersegment lässt sich besonders kostengünstig herstellen. Ferner ermöglicht eine solche Verbindung einen besonders geräuscharmen Betrieb des Generators.

Der Vergussmassekanal hat den Vorteil, dass sich die Vergussmasse gleichmäßig zwischen dem Rotor-Blechpaket und den Magneteinheiten verteilt. Dies ermöglicht einen besonders geräuschoptimierten Betrieb eines Generators. Ferner ermöglicht der Vergussmassekanal eine verbesserte und langlebigere Verbindung zwischen dem Rotor-Blechpaket und den Magneteinheiten.

Gemäß einem weiteren Aspekt wird die Aufgabe durch einen Rotor eines Generators einer Windenergieanlage nach Anspruch 12 gelöst.

Der Rotor ist insbesondere ein segmentierter Rotor. Vorzugsweise ist der Rotor ein Rotor eines segmentierten Generators. Der Rotor umfasst ein ringförmig ausgebildetes Rotorsegment oder mehrere teilringförmig ausgebildete Rotorsegmente, die ringförmig angeordnet sind. Ein solcher Rotor umfasst ein erfindungsgemäßes Rotorsegment und/oder Merkmale einer der zuvor beschriebenen Ausführungsformen des Rotorsegments oder einer Kombination daraus.

Für weitere Vorteile, Ausführungsvarianten und Ausführungsdetails des erfindungsgemäßen Rotors und dessen Fortbildungen wird auch auf die vorangehende Beschreibung zu den entsprechenden Merkmalen und Fortbildungen des Generators, des Statorsegments, des Stators, des Rotorsegments sowie den nachstehenden Beschreibungen der Windenergieanlage und des Verfahrens zur Herstellung eines Rotorsegments verwiesen.

Gemäß einem weiteren Aspekt wird die Aufgabe durch eine Windenergieanlage nach Anspruch 13 gelöst.

Für weitere Vorteile, Ausführungsvarianten und Ausführungsdetails der erfindungsgemäßen Windenergieanlage und dessen Fortbildungen wird auf die vorangehende Beschreibung zu den entsprechenden Merkmalen und Fortbildungen des Generators, des Stator-Blechpakets, des Statorsegments, des Stators, des Rotorsegments und des Rotors sowie den nachstehenden Beschreibungen des Verfahrens und der Verwendung eines Montagehilfswerkzeugs zur Herstellung eines Rotorsegments verwiesen.

Gemäß einem weiteren Aspekt wird die Aufgabe durch ein Verfahren zur Herstellung eines Rotorsegments gelöst. Insbesondere wird die Aufgabe durch ein Verfahren zur Herstellung eines zuvor beschriebenen Rotorsegments gelöst.

Das Verfahren zur Herstellung eines Rotorsegments umfasst folgende Schritte:
- Bereitstellen eines Magnetträgersegments mit einer ringförmigen oder teilringförmigen Geometrie und einer Rotor-Innenumfangsfläche, und
- Bereitstellen von mindestens einem Rotor-Blechpaket, das zur Aufnahme mindestens einer Magneteinheit ausgebildet ist und an der Rotor-Innenumfangsfläche angeordnet ist; und
- Bereitstellen mindestens einer Magneteinheit mit mindestens einem Magnetblock; und
- Anordnen der mindestens einen Magneteinheit an dem Rotor-Blechpaket; und
- stoffschlüssiges Verbinden der mindestens einen Magneteinheit an dem Rotor-Blechpaket.

Das erfindungsgemäße Verfahren und ihre möglichen Fortbildungen weisen Merkmale bzw. Verfahrensschritte auf, die sie insbesondere dafür geeignet machen für einen erfindungsgemäßen Generator und/oder eine erfindungsgemäße Windenergieanlage und/oder ein erfindungsgemäßes Rotorsegment und/oder einen erfindungsgemäßen Rotor sowie die jeweiligen Fortbildungen verwendet zu werden. Für weitere Vorteile, Ausführungsvarianten und Ausführungsdetails des erfindungsgemäßen Verfahrens und dessen Fortbildungen wird auf die vorangehende Beschreibung zu den entsprechenden Aspekten und Fortbildungen des Generators, des Stator-Blechpakets, des Statorsegments, des Stators, des Rotorsegments, des Rotors und/oder der Windenergieanlage verwiesen.

Nach einer bevorzugten Ausführungsform des Verfahrens ist vorgesehen, dass der Schritt des stoffschlüssigen Verbindens der mindestens einen Magneteinheit an dem Rotor-Blechpaket ein Vergießen der mindestens einen Magneteinheit an dem Rotor-Blechpaket umfasst, so dass eine Vergussmasse, die Magneteinheit zumindest teilweise umschließt.

Ferner kann bevorzugt sein, dass das Verfahren folgende Schritte vorzugsweise umfasst:
- Bereitstellen mindestens einer Magnetabdeckungsvorrichtung; und/oder
- Bereitstellen eines Montagehilfswerkzeugs, wobei vorzugsweise das Montagehilfswerkzeug aus Stahl besteht oder dieses umfasst, und wobei vorzugsweise das Montagehilfswerkzeug eine Negativform der mindestens einen Magnetabdeckungsvorrichtung und oder des Rotor-Blechpakets, insbesondere der Rotor-Blechpaketinnenumfangsfläche, ist; und/oder
- Befestigen des mindestens einen Rotor-Blechpakets an der Rotor-Innenumfangsfläche des Magnetträgersegments; und/oder
- Befestigen der mindestens einen Magnetabdeckungsvorrichtung an dem Rotor-Blechpaket; und/oder
- Anordnen des Montagehilfswerkzeugs an dem Magnetträgersegment, so dass das Montagehilfswerkzeug die mindestens eine Magnetabdeckungsvorrichtung und/oder das mindestens eine Rotor-Blechpaket umschließt; und/oder
- Einführen des mindestens einen Magnetblocks der mindestens einen Magneteinheit in die mindestens eine Magnetabdeckungsvorrichtung; und/oder
- Vergießen zumindest der mindestens einen Magnetabdeckungsvorrichtung mit dem darin eingeführten mindestens einen Magnetblock und dem Rotor-Blechpaket mit einer Vergussmasse, wobei das Vergießen mit der Vergussmasse insbesondere entgegen der Schwerkraft von unten nach oben erfolgt; und/oder
- Aushärten der Vergussmasse; und/oder
- Entfernen des Montagehilfswerkzeugs.

Das Einführen des mindestens einen Magnetblocks der mindestens einen Magneteinheit in die mindestens eine Magnetabdeckungsvorrichtung umfasst insbesondere ein Bestücken des Montagehilfswerkzeugs, vorzugsweise von Magnetzuführschächten des Montagehilfswerkzeugs, und/oder ein Zuführen der in den Magnetzuführschächten des Montagehilfswerkzeugs angeordneten Magnetblöcke der mindestens einen Magneteinheit in die mindestens eine Magnetabdeckungsvorrichtung mit eine Schiebvorrichtung, insbesondere in einer Axialrichtung. Ferner kann das Verfahren ein versetztes Anordnen des Montagehilfswerkzeugs an dem Magnetträgersegment umfassen, um in Magnetabdeckungsvorrichtungen, die noch keine Magnetblöcke gemäß dem zuvor beschriebenen Verfahren Magnetblöcke zuzuführen.

Das erfindungsgemäße Verfahren und ihre möglichen Fortbildungen weisen Merkmale bzw. Verfahrensschritte auf, die sie insbesondere dafür geeignet machen für einen erfindungsgemäßen segmentierten Generator und/oder ein erfindungsgemäßes Rotorsegment und/oder einen erfindungsgemäßen Rotor und/oder eine erfindungsgemäße Windenergieanlage sowie die jeweiligen Fortbildungen verwendet zu werden. Für weitere Vorteile, Ausführungsvarianten und Ausführungsdetails dieser weiteren Aspekte und ihrer möglichen Fortbildungen wird auch auf die zuvor erfolgte Beschreibung zu den entsprechenden Merkmalen und Fortbildungen des Generators, des Stator-Blechpakets, des Statorsegments, des Stators, des Rotorsegments, des Rotors, der Windenergieanlage und/oder der Verwendung eines Montagehilfswerkzeugs zur Herstellung eines Rotorsegments verwiesen.

Gemäß einem weiteren Aspekt wird die Aufgabe durch Verwendung eines Montagehilfswerkzeugs zur Herstellung eines Rotorsegments, insbesondere zur Herstellung eines zuvor beschriebene Rotorsegments, vorzugsweise zum Anordnen mindestens einer Magneteinheit an einem Rotor-Blechpaket und zum stoffschlüssigen Verbinden der mindestens einen Magneteinheit an dem Rotor-Blechpaket, gelöst, wobei das des stoffschlüssige Verbinden insbesondere ein Vergießen der mindestens einen Magneteinheit an dem Rotor-Blechpaket ist, so dass eine Vergussmasse) die Magneteinheit zumindest teilweise umschließt.

Die erfindungsgemäße Verwendung weist Merkmale bzw. Verfahrensschritte auf, die sie insbesondere dafür geeignet macht für ein erfindungsgemäßes Rotorsegment und/oder einen erfindungsgemäßen Rotor und/oder einen erfindungsgemäßen Generator sowie die jeweiligen Fortbildungen verwendet zu werden. Für weitere Vorteile, Ausführungsvarianten und Ausführungsdetails dieser weiteren Aspekte und ihrer möglichen Fortbildungen wird auch auf die zuvor erfolgte Beschreibung zu den entsprechenden Merkmalen und Fortbildungen des Generators, des Stator-Blechpakets, des Statorsegments, des Stators, des Rotorsegments, des Rotors, der Windenergieanlage und/oder des Verfahrens verwiesen.

Bevorzugte Ausführungsformen der Erfindung werden beispielhaft anhand der beiliegenden Figuren erläutert. Es zeigen:
- Fig. 1:: eine schematische, dreidimensionale Ansicht einer bevorzugten Ausführungsform einer Windenergieanlage in einem Betriebszustand;
- Fig. 2:: eine schematische, dreidimensionale Ansicht einer bevorzugten Ausführungsform eines segmentierten Generators;
- Fig. 3:: eine schematische, dreidimensionale Ansicht einer bevorzugten Ausführungsform eines Generatorsegments eines in Figur 2 dargestellten segmentierten Generators
- Fig. 4:: eine schematische, dreidimensionale Ansicht einer bevorzugten Ausführungsform eines Stator-Blechpakets mit daran angeordneten Spuleneinheiten;
- Fig. 5:: ein schematischer, dreidimensionaler Ausschnitt einer bevorzugten Ausführungsform eines Stator-Blechstapels des in Figur4 dargestellten Stator-Blechpakets;
- Fig. 6:: eine schematische, dreidimensionale Detailansicht des in Figur 5 dargestellten Stator-Blechstapels;
- Fig. 7:: eine schematische, dreidimensionale Detailansicht einer bevorzugten Ausführungsform eines Statorsegments;
- Fig. 8:: eine schematische, dreidimensionale Detailansicht einer weiteren bevorzugten Ausführungsform eines Statorsegments;
- Fig. 9:: eine schematische, dreidimensionale Ansicht einer bevorzugten Anordnung zweier in Umfangsrichtung benachbart angeordneter Stator-Blechpakete mit daran angeordneten Spuleneinheiten;
- Fig. 10:: eine schematische, dreidimensionale Detailansicht der in Figur 9 schematisch dargestellten Anordnung benachbarter Stator-Blechpakete;
- Fig. 11:: eine schematische, dreidimensionale Ansicht einer bevorzugten Ausführungsform eines Rotor-Blechpakets mit daran angeordneten Magneteinheiten;
- Fig. 12:: eine schematische, dreidimensionale Detailansicht der in Figur 11 schematisch dargestellten Ansicht des Rotor-Blechpakets mit daran angeordneten Magneteinheiten;
- Fig. 13:: eine schematische, dreidimensionale Detailansicht der in Figur 12 schematisch dargestellten Ansicht des Rotor-Blechpakets mit daran angeordneten Magneteinheiten;
- Fig. 14:: eine schematische, dreidimensionale Ansicht einer weiteren bevorzugten Ausführungsform eines Rotor-Blechpakets mit daran angeordneten Magneteinheiten;

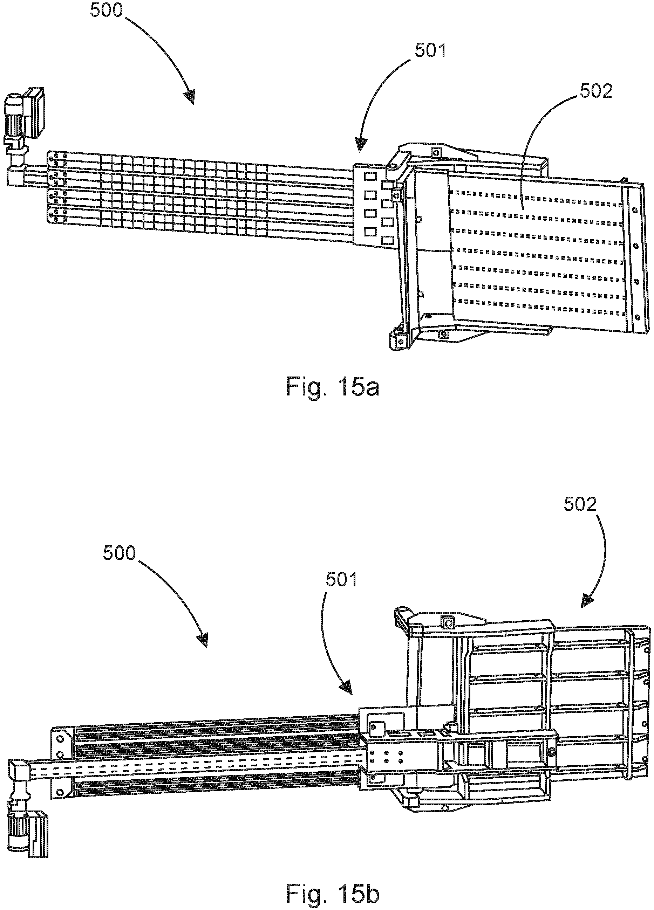

- Fig. 15a,b: eine schematische, dreidimensionale Ansicht einer beispielhaften Ausführungsform eines Montagehilfswerkzeugs in der Vorder- und Rückansicht;
- Fig. 16a,b: eine schematische, dreidimensionale Detailansicht der Vorder- und Rückansicht des in den Figuren 15a,b dargestellten Montagehilfswerkzeugs;
- Fig. 17:: ein schematisches Ablaufdiagramm, das exemplarisch Schritte einer bevorzugten Ausführungsform eines Verfahrens zur Herstellung eines Rotorsegments einer Windenergieanlage zeigt; und
- Fig. 18:: ein schematisches Ablaufdiagramm, das exemplarisch Schritte einerweiteren bevorzugten Ausführungsform eines Verfahrens zur Herstellung eines Rotorsegments einer Windenergieanlage zeigt.

In den Figuren sind gleiche oder im Wesentlichen funktionsgleiche bzw. -ähnliche Elemente mit den gleichen Bezugszeichen bezeichnet. Sofern in der vorliegenden Figurenbeschreibung allgemein Bezug zu einem Generator, Rotor oder Stator genommen wird ist davon prinzipiell ein segmentierter Generator, segmentierte Rotor oder segmentierter Stator umfasst, sofern dies nicht ausdrücklich anders beschrieben ist.

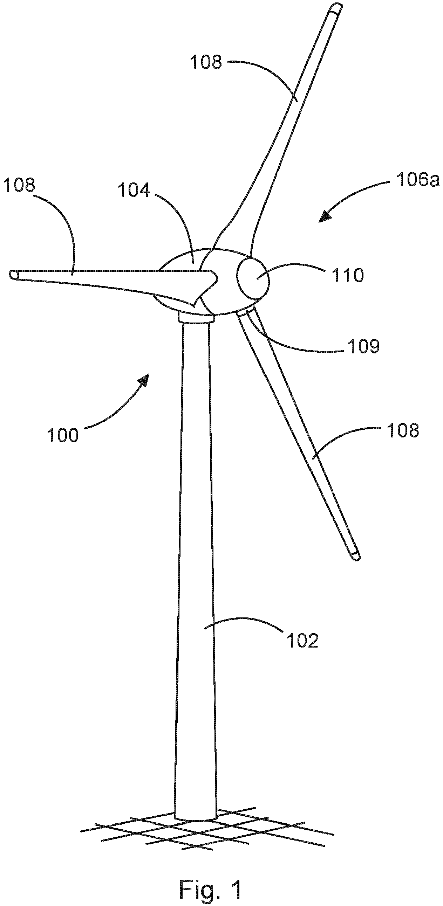

Figur 1 zeigt eine schematische, dreidimensionale Ansicht einer beispielhaften Ausführungsform einer Windenergieanlage. Figur 1 zeigt insbesondere eine Windenergieanlage 100 mit einem Turm 102 und einer Gondel 104. An der Gondel 104 ist ein aerodynamischer Rotor 106a mit drei Rotorblättern 108 und einem Spinner 110 angeordnet. Der aerodynamische Rotor 106a wird im Betrieb durch den Wind in eine Drehbewegung versetzt und treibt dadurch einen Generator 1, insbesondere einen Rotor 106 des Generators 1, an. Der Generator 1 ist insbesondere außerhalb der Gondel 104 angeordnet. Der Turm 102 weist insbesondere Windenergieanlagen-Stahlturmringsegmente mit Flanschsegmenten auf. Dadurch wird der Turm 102 mittels einfach zu transportierender Bauteile aufgebaut, die darüber hinaus mit hoher Präzision und geringem Aufwand verbunden werden können.

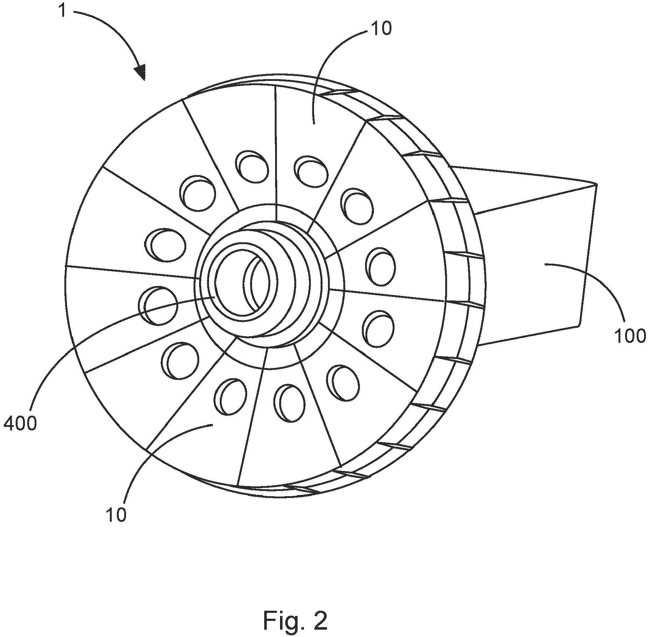

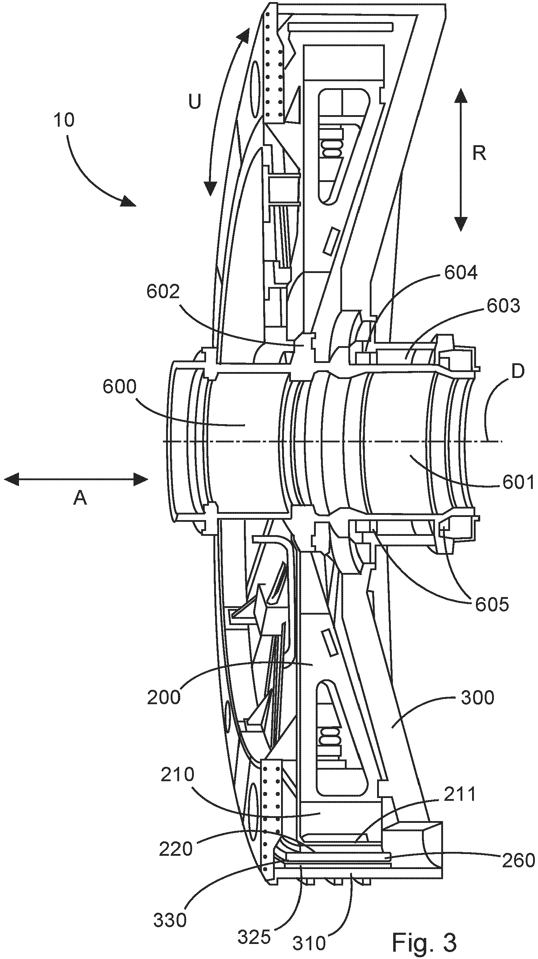

Figur 2 zeigt einen segmentierten Generator 1, der zwei Generatorsegmente 10 aufweist, in einer schematischen, dreidimensionalen Ansicht. Der in Figur 2 dargestellte segmentierte Generator ist beispielsweise für eine in Figur 1 dargestellte Windenergieanlage geeignet. Figur 3 zeigt ein Generatorsegment 10 des in Figur 2 dargestellten segmentierten Generators 1 in einer schematischen, dreidimensionalen Ansicht. Das Generatorsegment 10 weist ein Statorsegment 200 und ein Rotorsegment 300 auf.

Das in Figur 3 dargestellte Generatorsegment weist in dieser bevorzugten Ausführungsform ein ringförmig ausgebildetes Statorsegment 200 auf. Das Statorsegment 200 umfasst ein Spulenträgersegment 210 mit einer ringförmigen oder teilringförmigen Geometrie und einer Stator-Umfangsstruktur 211. Ferner umfasst das Statorsegment 200 mindestens ein Stator-Blechpaket 220, wie dies Beispielsweise in Bezug zu den Figuren 2 bis 6 ausführlich beschrieben wurde. Das Stator-Blechpaket 220 ist an der Stator-Umfangsstruktur 211 angeordnet und nimmt mehrere Spuleneinheiten 260 auf.

Das Statorsegment 200 erstreckt sich bevorzugt in der Radialrichtung R zwischen einem radial innenliegenden Flansch zur Befestigung des Statorsegments 200 an dem Stator-Grundkörperflansch 602 eines feststehenden Lagerteils 601 einer Lagereinheit 600 und einem radial außenliegenden Spulenträgersegment 210. In der vorliegenden bevorzugten Ausführungsform ist das Statorsegment 200 als Schalenstruktur ausgebildet, die sich pyramidenstumpfförmig von dem Flansch zu dem Spulenträgersegment 210 erstreckt, wobei der Querschnitt des Statorsegments 200 von dem Flansch zu dem Spulenträgersegment 210 zunimmt. Das mindestens eine Stator-Blechpaket 220 ist an dem Spulenträgersegment 210 angeordnet. An dem mindestens einen Stator-Blechpaket 220 ist wiederum mindestens eine Spuleneinheit 260 angeordnet. In der hier dargestellten bevorzugten Ausführungsform bilden das mindestens eine Stator-Blechpaket 220 und/oder die mindestens eine Spuleneinheit 260 eine Stator-Außenumfangsfläche 250.

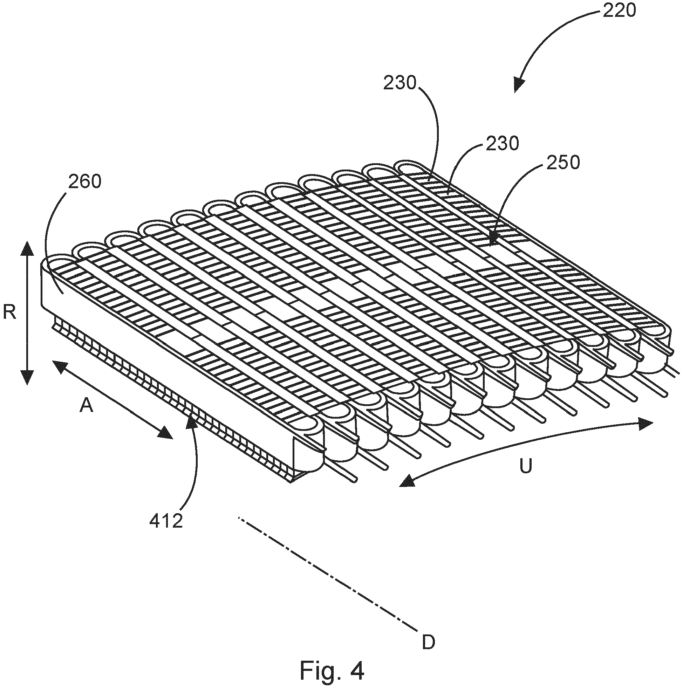

Figur 4 zeigt eine schematische, dreidimensionale Ansicht einer beispielhaften Ausführungsform eines Stator-Blechpakets 220. Das Stator-Blechpaket 220 ist zur Aufnahme mindestens einer Spuleneinheit 260 eines Statorsegments 200 eines Stators 109 eines Generators 1 geeignet, wie dieser beispielsweise in Figur 2 schematisch dargestellt ist. In der vorliegenden bevorzugten Ausführungsform sind an dem Stator-Blechpaket 220 zwölf Spuleneinheiten angeordnet. Das Stator-Blechpaket 220 weist mehrere Stator-Blechstapel 230 auf. Die Stator-Blechstapel 230 sind in einer Axialrichtung A parallel zu einer Drehachse D beabstandet zueinander angeordnet.

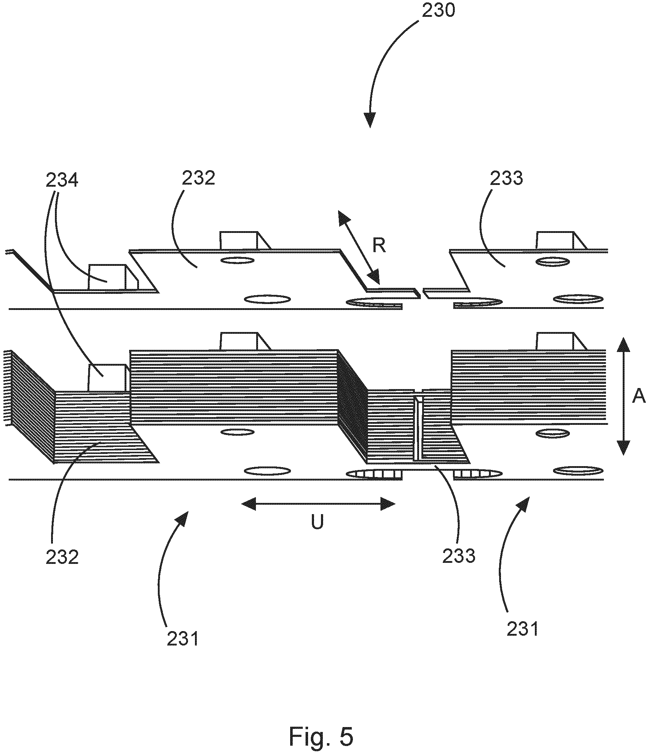

Figur 5 zeigt einen schematischen, dreidimensionalen Ausschnitt einer beispielhaften Ausführungsform eines solchen Stator-Blechpakets mit mehreren Stator-Blechstapeln 230 mit zwei Blechstapeleinheiten 231. Es ist zu sehen, dass benachbarte Stator-Blechstapeln 230 in der Axialrichtung beabstandet zueinander angeordnet sind. Hierzu ist ein Abstandselement 234 zwischen benachbarten Stator-Blechstapeln 230 angeordnet.

Ferner zeigt Figur 5 einen schematischen, dreidimensionalen Ausschnitt einer beispielhaften Ausführungsform eines solchen Stator-Blechstapels 230 mit zwei Blechstapeleinheiten 231. Die zwei oder mehr Blechstapeleinheiten 231 sind in einer Umfangsrichtung U beabstandet zueinander angeordnet. Die Blechstapeleinheiten 231 weisen mehrere erste Stator-Blechelemente 232 auf, die in der Axialrichtung A nebeneinander gestapelt angeordnet sind. Ferner ist zu sehen, dass der in Figur 5 schematisch dargestellte Stator-Blechstapel 230 zwei zweite Stator-Blechelemente 233 aufweist, welche von dem ersten Stator-Blechelement 232 verschieden sind. Die zweiten Stator-Blechelemente 233 verbinden jeweils in der Umfangsrichtung benachbarte Blechstapeleinheiten 231 der zwei oder mehr Blechstapeleinheiten 231 miteinander.

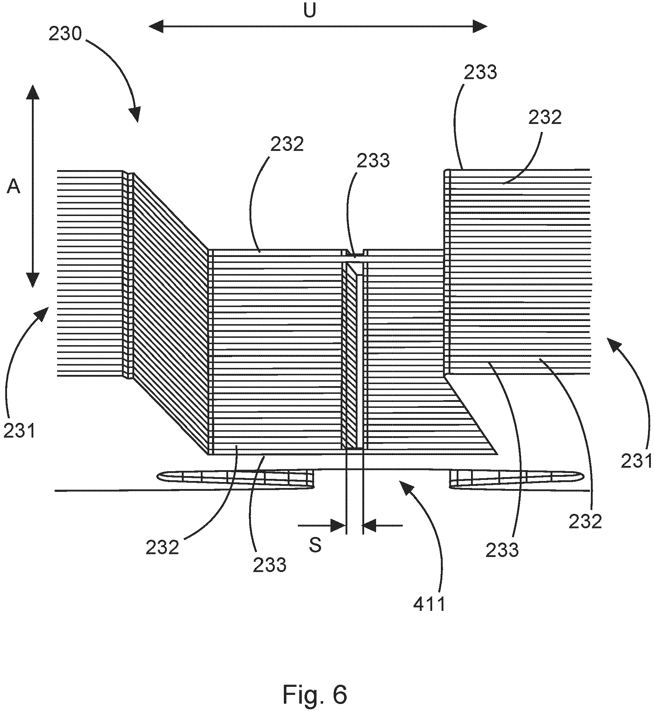

Figur 6 ist eine schematische, dreidimensionale Detailansicht des in Figur 5 dargestellten Stator-Blechstapels 230.Aus der Detaildarstellung von Figur 6 ist im unteren Bildabschnitt zu entnehmen, dass ein zweites Stator-Blechelement 233 als äußerstes Blechelement die beiden ausschnittsweise dargestellten Blechstapeleinheiten 231 miteinander verbindet. Im oberen Bildabschnitt der Detaildarstellung von Figur 6 ist zu sehen, dass ein zweites Stator-Blechelement 233 nicht als äußerstes Blechelement die beiden ausschnittsweise dargestellten Blechstapeleinheiten 231 miteinander verbindet. In der in Figur 6 links dargestellten Blechstapeleinheit 231 bildet ein erstes Stator-Blechelement 232 das äußerste Blechelement und in der rechts dargestellten Blechstapeleinheit 231 bildet ein zweites Stator-Blechelement 232 das äußerste Blechelement. Dieses zweites Stator-Blechelement 232 verbindet die in der Figur 6 in der rechts dargestellten Blechstapeleinheit 231 mit einer weiteren in der Umfangsrichtung U wiederum beabstandet angeordneten Blechstapeleinheit 231 (nicht dargestellt).

Die ersten Stator-Blechelemente 232 erstrecken sich in der Umfangsrichtung U mit einer ersten Blechlänge und die zweiten Stator-Blechelemente 233 mit einer zweiten Blechlänge. Es ist zu verstehen, dass die zweite Blechlänge der zweiten Stator-Blechelemente 233 sich im Vergleich zu der ersten Blechlänge der ersten Stator-Blechelemente 232 mehr als doppelt so weit erstreckt. Dies ist auf die in der Umfangsrichtung U beabstandete Anordnung benachbarter Blechstapeleinheiten 231 mit einem Blechstapelabstand S zurückzuführen. Die in der Umfangsrichtung benachbart angeordneten Blechstapeleinheiten 231 sind vorzugsweise mehr als 0 mm und weniger als 10 mm mit einem Blechstapelabstand S zueinander beabstandet angeordnet. Vorzugsweise sind die benachbart angeordneten Blechstapeleinheiten 231 mit einem Blechstapelabstand S von etwa 2 mm zueinander beabstandet angeordnet.

Insbesondere ist bevorzugt, dass das in Figur 2 schematisch dargestellte Stator-Blechpaket 220 bzw. dessen Stator-Blechstapel 230 in der Umfangsrichtung U mit einem Bogenwinkel um etwa 15° ± 1°, erstrecken. Ferner ist bevorzugt, dass sich die ersten Stator-Blechelemente 232 in der Umfangsrichtung U mit einem Bogenwinkel um etwa um 5° ± 1° erstrecken. Für die zweiten Stator-Blechelemente 233 ist bevorzugt, dass diese sich in der Umfangsrichtung U mit einem Bogenwinkel von etwa 5° ± 1° erstrecken. Gemäß einer solchen bevorzugten Ausführungsform umfasst ein Stator-Blechstapel 230 des Stator-Blechpakets 220 in der Umfangsrichtung U drei benachbart angeordnete Blechstapeleinheiten 231, an denen jeweils vier Spuleneinheiten 260 angeordnet sind.

Ferner erstrecken sich in der Axialrichtung A die ersten Stator-Blechelemente 232 mit einer ersten Blechbreite und die zweiten Stator-Blechelemente 233 mit einer zweiten Blechbreite. Es ist bevorzugt, dass die erste Blechbreite der zweiten Blechbreite entspricht.

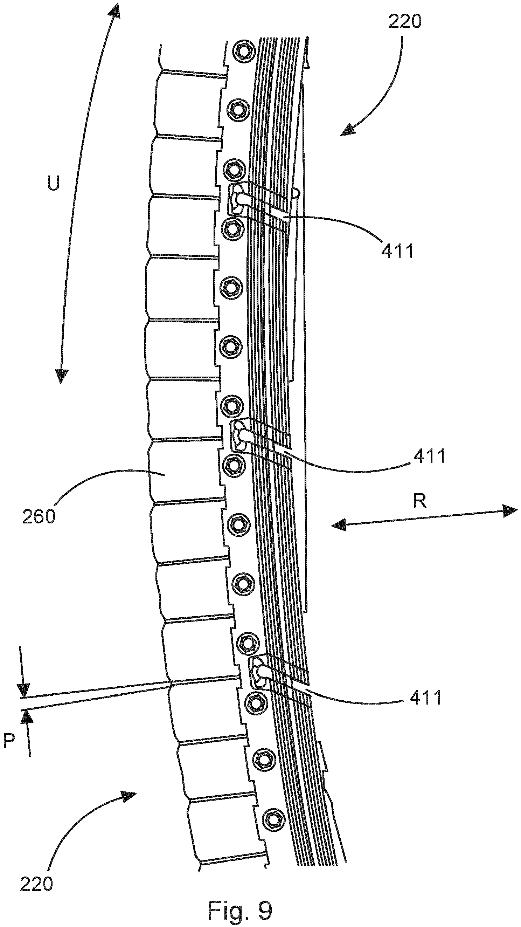

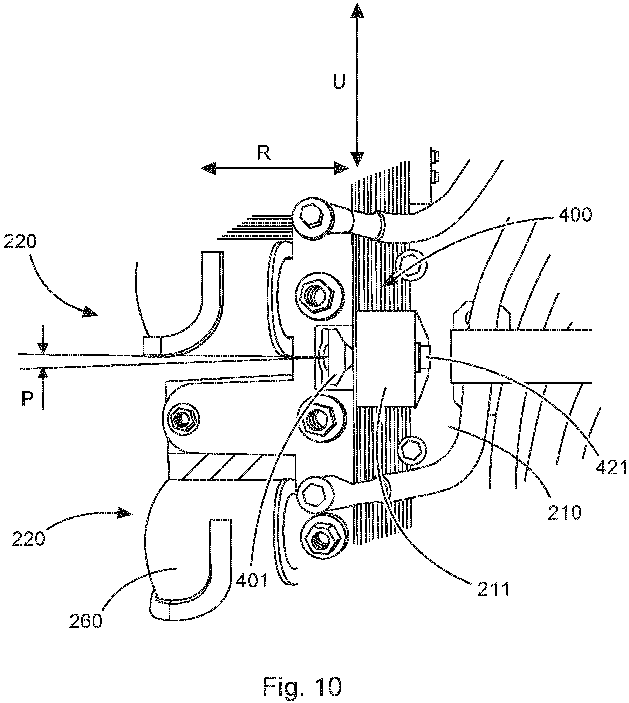

In den Figuren 9 und 10 ist zu sehen, dass in der Umfangsrichtung U benachbart angeordnete Stator-Blechpakete 220 bzw. Stator-Blechstapel 230 mit einem Blechpaketabstand P zueinander beabstandet angeordnet sind. In der in den Figuren 9 und 10 dargestellten bevorzugten Ausführungsform des Stator-Blechpakets 220 ist vorgesehen, dass der Blechstapelabstand S dem Blechpaketabstand P entspricht.

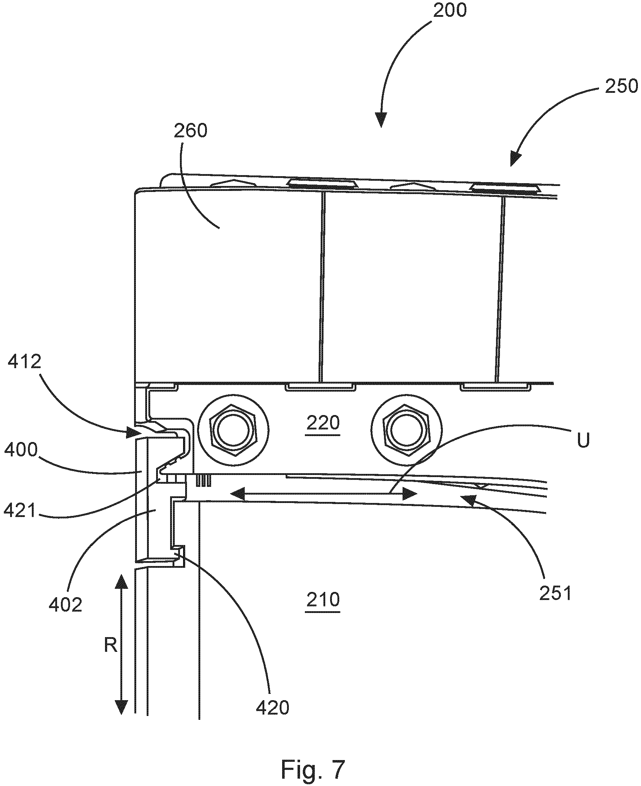

Ferner kann das Statorsegment in bevorzugter Weise eine Befestigungsvorrichtung 400 zur Befestigung des mindestens ein Stator-Blechpakets 220 an dem Spulenträgersegment 210 aufweisen. Hierzu ist die Befestigungsvorrichtung 400 als Klemmvorrichtung ausgebildet, mittels welcher das mindestens eine Stator-Blechpaket 220 an dem Spulenträgersegment kraft- und/oder formschlüssig verbunden wird. In den in Figuren 7, 8 und 10 schematisch dargestellten Detailansichten einer beispielhaften Ausführungsform eines Statorsegments 200 sind bevorzugte Ausführungen der als Klemmvorrichtung ausgebildeten Befestigungsvorrichtung 400 abgebildet.

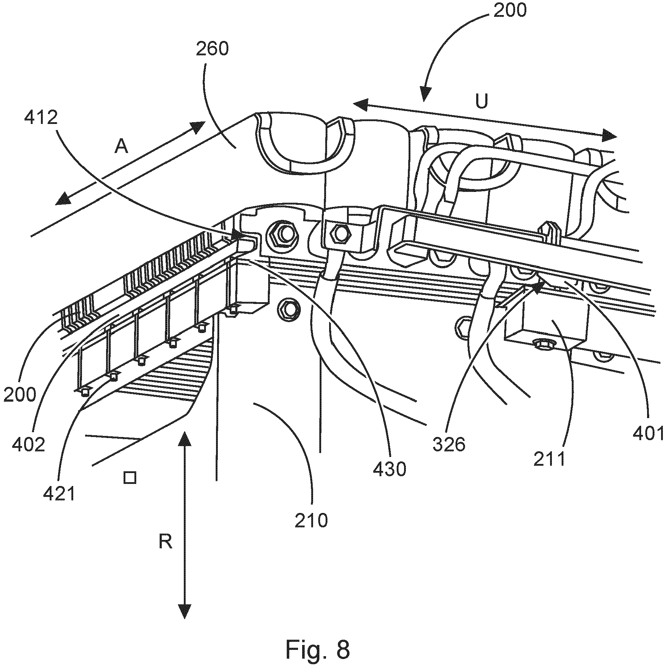

Beispielsweise zeigen Figuren 8 und 10 eine bevorzugte Ausführungsform der Befestigungsvorrichtung 400. Die dort dargestellte Befestigungsvorrichtung weist eine erste Klemmleiste 401 auf, die trapezförmige ausgebildet ist. Ferner zeigt Figur 8 eine weitere bevorzugte Ausführungsform der Befestigungsvorrichtung 400, die im Detail in Figur 7 schematisch dargestellt ist. In dieser weiteren bevorzugten Ausführung der Befestigungsvorrichtung 400 ist eine zweite Klemmleiste 402 vorgesehen, die von der ersten Klemmleiste 401 verschieden ist. In der in den Figuren 7 und 8 dargestellten bevorzugten Ausführung der Befestigungsvorrichtung 400 ist die zweite Klemmleiste 402 als teiltrapezförmige Klemmleiste ausgebildet.

Sowohl die erste als auch die zweite Klemmleiste 401, 402 sind zur kraft- und/oder formschlüssigen Befestigung der Befestigungsvorrichtung 400 an dem mindestens einen Stator-Blechpaket 220 ausgebildet. Zur Befestigung des Stator-Blechpakets 220 an einer Stator-Umfangsstruktur 211 des Spulenträgersegments 210 weist das Stator-Blechpaket 220 mindestens eine erste Befestigungsnut 411 und/oder eine zweite Befestigungsnut 412 auf. Die erste und/oder zweite Befestigungsnut 411 ist im Wesentlichen an der radial innenliegenden Stator-Innenumfangsfläche ausgebildet. In den Figuren 5, 6 und 9 ist schematisch eine erste Befestigungsnut 411 dargestellt, die trapezförmig ausgebildet ist. In den Figuren 7 und 8 ist eine zweite Befestigungsnut 412 dargestellt, die von der ersten Befestigungsnut 411 verschieden ist und teiltrapezförmig ausgebildet ist. Das Stator-Blechpaket 220 bildet die zweite Befestigungsnut 412 vorzugsweise an einem ersten und zweiten Endabschnitt 220a,b aus. Es ist zu verstehen, dass in diesen Ausführungsbeispielen die erste trapezförmig ausgebildete Befestigungsnut 411 zur Aufnahme der ersten trapezförmig ausgebildeten Klemmleiste 401 und die zweite teiltrapezförmig ausgebildete Befestigungsnut 412 zur Aufnahme der zweiten trapezförmig ausgebildeten Klemmleiste 402 ausgebildet ist.

Die erste und zweite Klemmleiste 401, 402 weisen jeweils eine Kontaktfläche auf zur Befestigung der ersten und/oder zweiten Klemmleiste 401, 402 an dem Stator-Blechpaket 220. Die erste und zweite Befestigungsnut weisen mindestens eine Nutwand als Kontaktfläche auf, um die erste bzw. zweite Klemmleiste 401, 402 zu befestigen. Für die in den Figuren dargestellten bevorzugten Ausführungsformen der Klemmleisten 401, 402 ist vorgesehen, dass deren Kontaktflächen mehrere punkt- und/oder linienförmige Kontakterhebungen aufweisen. Dies ermöglicht, eine kraft- und formschlüssige Verbindung zwischen den Klemmleisten 401, 402 und den Befestigungsnuten 411, 412 herzustellen. Solch ausgebildete Kontaktflächen sind in den Figuren 5 und 7 schematisch dargestellt.

Zur Befestigung des Stator-Blechpakets 220 an der Stator-Umfangsstruktur 211 mit der Befestigungsvorrichtung 400 ist vorgesehen, dass die Befestigungsvorrichtung 400 als Schrauben ausgebildete Spannelemente 421 aufweist. Mit diesen Spannelementen 421 lassen sich die erste und zweite Klemmleiste 401 an dem Spulenträgersegment 210 bzw. dessen Stator-Umfangsstruktur 211 kraft- und/oder formschlüssig verbinden. Dies wird in Bezug zu der ersten Klemmleiste 401 insbesondere in den Figuren 8 und 10 deutlich; in Bezug zu der zweiten Klemmleiste 402 ist dies schematisch in Figur 8 dargestellt.

Es kann auch bevorzugt sein, dass die Befestigungsvorrichtung 400 ergänzend oder alternativ einen Befestigungsanschluss 420 aufweist, der eine formschlüssige Verbindung der ersten und/oder zweiten Klemmleiste 401, 402 mit der Stator-Umfangsstruktur 211 ermöglicht. Dies ist beispielhaft in Figur 7 in Bezug zu der zweiten Klemmleiste 402 dargestellt. Hierzu weist die zweite Klemmleiste 402 einen Vorsprung in der Umfangsrichtung U auf, die zur Verbindung des Stator-Blechpakets 220 an der Stator-Umfangsstruktur 211 formschlüssig in eine entsprechende Nut an dem Spulenträgersegment 210 bzw. der Stator-Umfangsstruktur 211 greift. Ferner sind in der zweiten Befestigungsnut 412 Spannelemente angeordnet, welche das Stator-Blechpaket 220 gegenüber dem Spulenträgersegment 210 ausrichten und eine kraft- und/oder formschlüssige Verbindung ermöglichen.

Insbesondere kann zur Reduktion der Geräuschemission ein zwischen der Befestigungsvorrichtung 400 und der ersten und/oder zweiten Klemmleiste 401, 402 angeordnetes Dämpferelement 430 angeordnet werden. Ein solches Dämpferelement ist schematisch in Figur 8 zwischen der zweiten Klemmleiste 402 und dem Stator-Blechpaket 220 angeordnet.

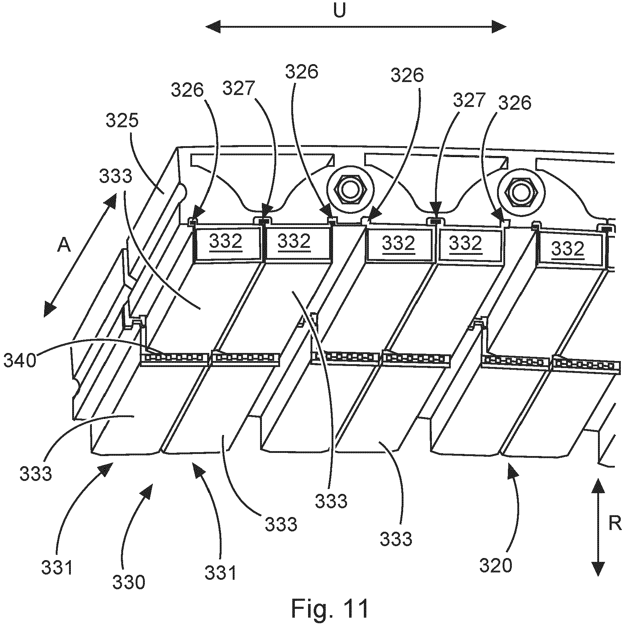

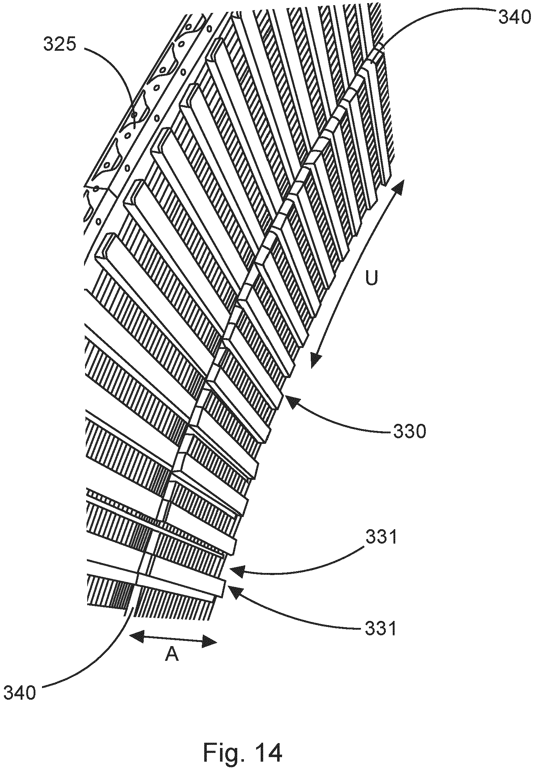

In dieser bevorzugten Ausführungsform des in Figur 3 dargestellten Generatorsegments 10 erstreckt sich das ringförmig ausgebildete Rotorsegment 300 in der Radialrichtung zwischen einem radial innenliegenden Flansch zur Befestigung des Rotorsegments 300 an einem Rotor-Grundkörperflansch 604 eines drehenden Lagerteils 603 einer Lagereinheit 600 und einem radial außenliegenden Magnetträgersegment 310. Das drehende Lagerteil 603 ist gegenüber dem feststehenden Lagerteil 601 mit Wälzkörpern 605 drehbar gelagert. An dem Magnetträgersegment 310 ist das mindestens eine Rotor-Blechpaket 325 angeordnet, wie dies beispielsweise in den Figuren 11 und 14 beispielhaft dargestellt wird. Vorzugsweise sind das Magnetträgersegment 310 und das mindestens eine Rotor-Blechpaket 325 miteinander verschweißt. An dem mindestens einen Rotor-Blechpaket 325 ist wiederum mindestens eine Magneteinheit 330 angeordnet. In der hier dargestellten bevorzugten Ausführungsform bildet die mindestens eine Magneteinheit 330 eine Rotor-Innenumfangsfläche 320.

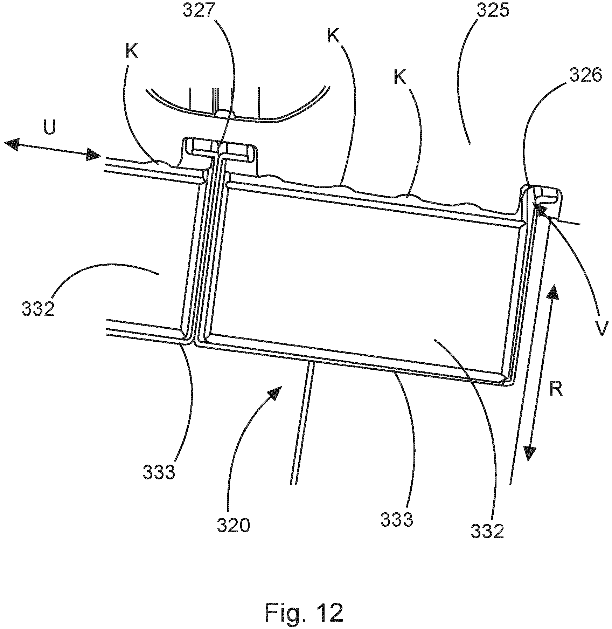

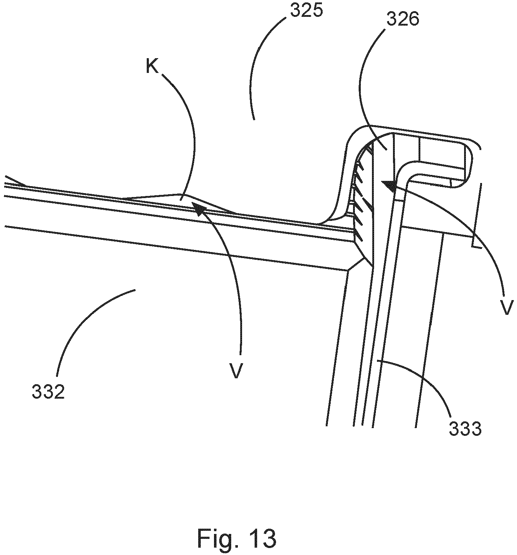

Es ist vorgesehen, dass das Rotorsegment 300 mehrere Magnetabdeckungsvorrichtungen 333 aufweist, die Magneteinheiten 330 teilweise umschließen und die mit dem Rotor-Blechpaket 325 verbunden sind. Dies zeigen beispielsweise die Figuren 11 bis 14. Hierzu weist das Rotor-Blechpaket 325 erste und zweite Klemmnuten 326, 327 auf, die sich in Axialrichtung erstrecken. In diese ersten und zweiten Klemmnuten 326, 327 werden die Magnetabdeckungsvorrichtungen 333 in der Axialrichtung A eingeschoben. Die ersten und zweiten Klemmnuten 326, 327 ermöglichen eine kraft- und/oder formschlüssige Verbindung der Magnetabdeckungsvorrichtung 333 an dem Rotor-Blechpaket 325. Es ist zu sehen, dass die erste Klemmnut 326 von der zweiten Klemmnut 327 verschieden ist. Die erste Klemmnut 326 ist vorzugsweise als L-förmige Nut ausgebildet und die zweite Klemmnut 327 ist vorzugsweise als T-förmige Nut ausgebildet. Diese verschiedenen Ausführungen der ersten und zweiten Klemmnut 326, 327 in dem Rotor-Blechpaket 325 sind in den Figuren 11 und 12 schematisch dargestellt.

Das Rotorsegment 300 umfasst mehrere Magneteinheiten 330, die in der Umfangsrichtung U zueinander äquidistant angeordnet sind. Ferner sind in der Axialrichtung A benachbart angeordnete Magneteinheiten 330 in der Axialrichtung A beabstandet zueinander angeordnet, so dass ein Umfangsspalt 340 mit einer Spaltbreite definiert wird. Es ist ferner zu verstehen, dass die Magneteinheiten 330 in den in den Figuren dargestellten bevorzugten Ausführungen des Rotorsegments zwei Magnetreihen 331 aufweisen, die in der Umfangsrichtung U beabstandet zueinander angeordnet sind. Die besonderen Ausführungen der Magneteinheiten 330 zeigen beispielsweise Figuren 9 und 12.

Die Magneteinheiten 330 sind an dem Rotor-Blechpaket 325 angeordnet und stoffschlüssig mit dem Rotor-Blechpaket 325 verbunden. Hierzu umschließt eine Vergussmasse V die Magneteinheiten 330 zumindest teilweise. Damit die Vergussmasse V sich gleichmäßig zwischen den Magneteinheiten 330, insbesondere den Magnetblöcken 332, und dem Rotor-Statorblechpaket 325 verteilt, umfassen die Magnetblöcke 332 auf einer Magnetblockseite bzw. einem Oberflächenabschnitt Nuten. Die an den Magnetblöcken 332 ausgebildete Nuten sind insbesondere Axialnuten in der Axialrichtung A, Umfangsnuten in der Umfangsrichtung und Diagonalnuten, die diagonal zu der Umfangsrichtung und Axialrichtung verlaufen. In Figur 10 sind die Axialnuten an einer Magnetblockseite zu erkennen, die der Rotor-Innenumfangsfläche 320 zugewandt ist. Axialnuten und Diagonalnuten sind in den Figuren der bevorzugten Ausführungsformen nicht dargestellt. Ferner wird die Verteilung der Vergussmasse V zwischen den Magneteinheiten 330 und dem Rotor-Blechpaket 325 durch Vergussmassekanäle K verbessert, welche das Rotor-Blechpaket 325 ausbildet. Solche Vergussmassekanäle K sind beispielsweise in Figur 12 dargestellt. Die dort beispielhafte Ausführungsform des Rotor-Blechpakets 325 weist im Wesentlichen Vergussmassekanäle K auf, die sich in der Axialrichtung A erstrecken. Es kann auch bevorzugt sein, dass das Rotor-Blechpakete 325 ergänzend und/oder alternativ Vergussmassekanäle K aufweisen, die sich im Wesentlichen in der Umfangsrichtung U und/oder in der Diagonalrichtung, diagonal zu der Umfangsrichtung U und der Axialrichtung A erstrecken.

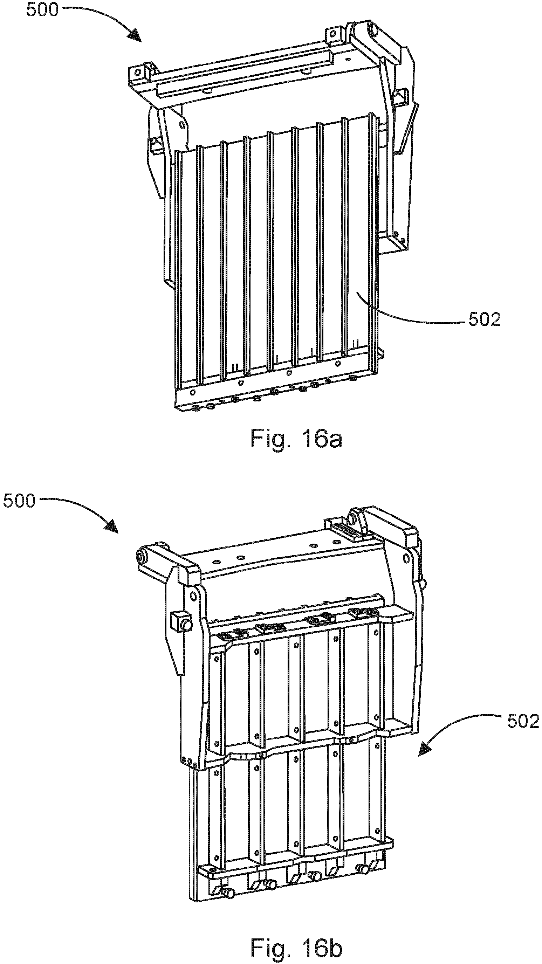

Zum stoffschlüssigen Verbinden der Magneteinheiten 330 an dem Rotor-Blechpaket 325 mit der Vergussmasse K wird ein Montagehilfswerkzeug 500 verwendet. Das Montagehilfswerkzeug 500 stellt im Wesentlichen eine Negativform der an dem Rotor-Blechpaket 325 angeordneten Magnetabdeckungsvorrichtung 333 dar. Figuren 16a-17b zeigen eine bevorzugte Ausführungsform eines solchen Montagehilfswerkzeugs 500. Für das Vergießen der Vergussmasse K, also für das stoffschlüssige Verbinden der Magneteinheiten 330 an dem Rotor-Blechpaket 325, wir das Montagehilfswerkzeug 500 auf dem Rotorsegment 300 aufgesetzt und das Montagehilfswerkzeug 500 mit den Magnetblöcken 332 über Magnetzuführschächte bestückt. Mit einer Schiebvorrichtung 501 des Montagehilfswerkzeugs 500 werden die Magnetblöcke 332 mit Hilfe der Magnetzuführschächte 502 den Magnetabdeckungsvorrichtungen 333 in der Axialrichtung A zugeführt. Anschließend wird das Montagehilfswerkzeug 500 in der Umfangsrichtung U gegenüber dem Rotorsegment 300 versetzt angeordnet und gemäß dem zuvor beschriebenen Vorgehen das Montagehilfswerkzeug 500 mit den Magnetblöcken 332 bestückt, die anschließend - wie ebenfalls zuvor beschrieben - den noch freien Magnetabdeckungsvorrichtungen 333 in der Axialrichtung A zugeführt werden. Dies wird wiederholt bis alle Magnetabdeckungsvorrichtungen 333 des Rotorsegments mit Magnetblöcken 332 bestückt sind.

Die Montagehilfswerkzeug 500, insbesondere die Magnetzuführschächte sind aus Stahl ausgebildet. Dies hat den Effekt, dass die der Magnetabdeckungsvorrichtungen 333 zugeführten Magnetblöcke 332 beim Zuführen plan an den Magnetabdeckungsvorrichtungen 333 anliegen und beim Zuführen nicht mit dem Rotor-Blechpaket in Kontakt stehen. Die Magnetkräfte der Magnetblöcke 332 wirken in Richtung des Montagehilfswerkzeugs 500, so dass die Magnetblöcke 332 in der Radialrichtung mit einem Spalt beabstandet den Magnetabdeckungsvorrichtungen 333 zugeführt werden könne. Dieser Spalt dient auch als zusätzlich Kanal, in welchen die Vergussmasse V bei der Herstellung des Rotorsegments 300 aufsteigen kann.

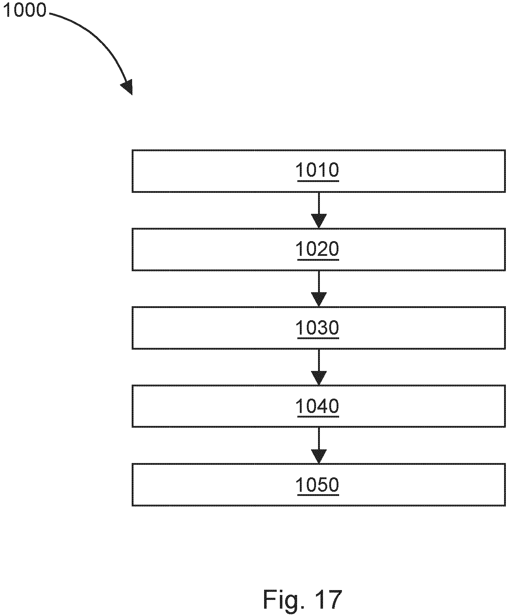

Figur 17 ist ein schematisches Ablaufdiagramm, das exemplarisch Schritte einer bevorzugten Ausführungsform eines Verfahrens 1000 zur Herstellung eines Rotorsegments 300 zeigt.

Das Verfahren 1000 zur Herstellung eines Rotorsegments 300 umfasst ein Bereitstellen 1010 eines Magnetträgersegments 310 mit einer ringförmigen oder teilringförmigen Geometrie und einer Rotor-Innenumfangsfläche 320, ein Bereitstellen 1020 von mindestens einem Rotor-Blechpaket 325, das zur Aufnahme mindestens einer Magneteinheit 330 ausgebildet ist und an der Rotor-Innenumfangsfläche angeordnet ist und ein Bereitstellen 1030 mindestens einer Magneteinheit 330 mit mindestens einem Magnetblock 332. Ferner umfasst das Verfahren 1000 ein Anordnen 1040 der mindestens einen Magneteinheit 330 an dem Rotor-Blechpaket 325 und ein stoffschlüssiges Verbinden 1050 der mindestens einen Magneteinheit 330 an dem Rotor-Blechpaket 325.

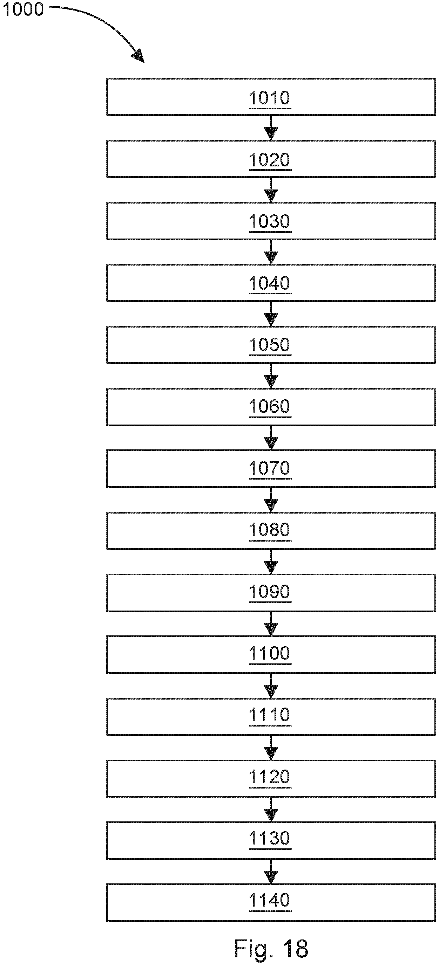

Figur 18 ist ein schematisches Ablaufdiagramm, das exemplarisch Schritte einer weiteren bevorzugten Ausführungsform eines Verfahrens 1000 zur Herstellung eines Rotorsegments 300 zeigt.

Gemäß dieser weiteren bevorzugten Ausführungsform des Verfahrens 1000 umfasst der Schritt des stoffschlüssigen Verbindens der mindestens einen Magneteinheit 330 an dem Rotor-Blechpaket 325 vorzugsweise ein Vergießen der der mindestens einen Magneteinheit 330 an dem Rotor-Blechpaket 325, so dass eine Vergussmasse V die Magneteinheit 330 zumindest teilweise umschließt.

Ferner umfasst diese weitere bevorzugte Ausführungsform des Verfahrens 1000 ein Bereitstellen 1060 mindestens einer Magnetabdeckungsvorrichtung 333; und/oder ein Bereitstellen 1070 eines Montagehilfswerkzeugs 500, wobei vorzugsweise das Montagehilfswerkzeug 500 aus Stahl besteht oder dieses umfasst, und wobei vorzugsweise das Montagehilfswerkzeug 500 eine Negativform der mindestens einen Magnetabdeckungsvorrichtung 333 und oder des Rotor-Blechpakets, insbesondere der Rotor-Blechpaketinnenumfangsfläche, ist. Insbesondere umfasst diese weitere Ausführungsform des Verfahrens 1000 ein Befestigen 1080 des mindestens einen Rotor-Blechpakets 325 an der Rotor-Innenumfangsfläche 320 des Magnetträgersegments 310 und/oder ein Befestigen 1090 der mindestens einen Magnetabdeckungsvorrichtung 333 an dem Rotor-Blechpaket 325. Ergänzend oder alternativ kann das Verfahren 1000 ein Anordnen 1100 des Montagehilfswerkzeugs 500 an dem Magnetträgersegment 310 umfassen, so dass das Montagehilfswerkzeug die mindestens eine Magnetabdeckungsvorrichtung 333 und/oder das mindestens eine Rotor-Blechpaket 325 umschließt. Ferner umfasst das Verfahren 1000 bevorzugt ein Einführen 1110 des mindestens einen Magnetblocks 332 der mindestens einen Magneteinheit 330 in die mindestens eine Magnetabdeckungsvorrichtung 333. Insbesondere anschließend umfasst das Verfahren 1000 ein Vergießen 1120 zumindest der mindestens einen Magnetabdeckungsvorrichtung 333 mit dem darin eingeführten mindestens einen Magnetblock 332 und dem Rotor-Blechpaket 325 mit einer Vergussmasse V, wobei das Vergießen mit der Vergussmasse V insbesondere entgegen der Schwerkraft von unten nach oben erfolgt. Ferner folgt bevorzugt ein Aushärten 1130 der Vergussmasse V und/oder ein Entfernen 1140 des Montagehilfswerkzeugs 500.

### BEZUGSZEICHENLISTE

- 1: Generator
- 10: Generatorsegment
- 12: Luftspalt
- 100: Windenergieanlage
- 102: Turm
- 104: Gondel
- 106: Rotor
- 106a: aerodynamischer Rotor
- 108: Rotorblätter
- 109: Stator
- 110: Spinner
- 200: Statorsegment
- 210: Spulenträgersegment
- 211: Stator-Umfangsstruktur
- 220: Stator-Blechpaket
- 220a: erster Endabschnitt des Stator-Blechpakets
- 220b: zweiter Endabschnitt des Stator-Blechpakets
- 230: Stator-Blechstapel
- 231: Blechstapeleinheiten
- 232: erstes Stator-Blechelement
- 233: zweites Stator-Blechelement
- 234: Abstandselement
- 250: Stator-Außenumfangsfläche
- 251: Stator-Innenumfangsfläche
- 260: Spuleneinheit
- 300: Rotorsegment
- 310: Magnetträgersegment
- 320: Rotor-Innenumfangsfläche
- 325: Rotor-Blechpaket
- 326: erste Klemmnut
- 327: zweite Klemmnut
- 330: Magneteinheit
- 331: Magnetreihen
- 332: Magnetblock
- 333: Magnetabdeckungsvorrichtung
- 340: Umfangsspalt
- 400: Befestigungsvorrichtung
- 401: erste Klemmleiste
- 402: zweite Klemmleiste
- 411: erste Befestigungsnut
- 412: zweite Befestigungsnut
- 420: Befestigungsanschluss
- 421: Spannelement
- 430: Dämpferelement
- 500: Montagehilfswerkzeugs
- 501: Schiebvorrichtung
- 502: Magnetzuführschächte
- 600: Lagereinheit
- 601: feststehendes Lagerteil
- 602: Stator-Grundkörperflansch einer Lagereinheit
- 603: drehendes Lagerteil
- 604: Rotor-Grundkörperflansch einer Lagereinheit
- 605: Wälzkörper
- A: Axialrichtung
- D: Drehachse
- K: Vergussmassekanal
- P: Blechpaketabstand
- R: Radialrichtung
- S: Blechstapelabstand
- U: Umfangsrichtung
- V: Vergussmasse

## Patentansprüche

1. Generator (1), insbesondere segmentierter Generator (1), einer Windenergieanlage (100), umfassend einen Stator (109) nach Anspruch 7 und einen Rotor (106) nach Anspruch 12.

2. Stator-Blechpaket (220) zur Aufnahme mindestens einer Spuleneinheit (260) eines Statorsegments (200) eines Stators (109) eines Generators (1), insbesondere eines segmentierten Stators (109) eines segmentierten Generators (1), für eine Windenergieanlage (100), umfassend
- mindestens einen Stator-Blechstapel (230) mit zwei oder mehr Blechstapeleinheiten (231), die in einer Umfangsrichtung (U) beabstandet zueinander angeordnet sind und mehrere erste Stator-Blechelemente (232) aufweisen, die in einer Axialrichtung (A) nebeneinander, insbesondere gestapelt, angeordnet sind;
**dadurch gekennzeichnet, dass**
- der mindestens eine Stator-Blechstapel (230) mindestens ein zweites Stator-Blechelement (233), vorzugsweise zwei zweite Stator-Blechelemente (233), umfasst, welches von dem ersten Stator-Blechelement (232) verschieden ist und jeweils benachbarte Blechstapeleinheiten (231) der zwei oder mehr Blechstapeleinheiten (231) miteinander verbindet.

3. Stator-Blechpaket (220) nach dem vorhergehenden Anspruch, wobei
- die ersten Stator-Blechelemente (232) der mehreren ersten Stator-Blechelemente (232) in der Umfangsrichtung (U) eine erste Blechlänge aufweisen und das mindestens eine zweite Stator-Blechelement (233) in der Umfangsrichtung (U) eine zweite Blechlänge aufweist, wobei die zweite Blechlänge sich im Vergleich zu der ersten Blechlänge in der Umfangsrichtung (U) mindestens doppelt so weit erstreckt; und/oder
- die ersten Stator-Blechelemente (232) in der Axialrichtung (A) eine erste Blechbreite aufweisen und das mindestens eine zweite Stator-Blechelement (233) in der Axialrichtung (A) eine zweite Blechbreite aufweist, die der ersten Blechbreite entspricht.

4. Stator-Blechpaket (220) nach einem der vorhergehenden Ansprüche 2-3, wobei
- die zwei oder mehr Blechstapeleinheiten (231), in der Umfangsrichtung (U) mit einem Blechstapelabstand (S) beabstandet zueinander angeordnet sind, wobei der Blechstapelabstand (S) mehr als 0 mm, insbesondere mindestens 0,5 mm, 1 mm, 1,5 mm, 2 mm, 3 mm, 4 mm oder 5 mm, und/oder maximal 10 mm, 7,5 mm, 5 mm, 3 mm, 2 mm oder 1 mm beträgt; und/oder
- der Stator-Blechstapel (230) sich in Umfangsrichtung (U) mit einem Bogenwinkel um mindestens 10° und maximal um 20°, vorzugsweise um 15° ± 1°, erstreckt; und/oder
- die mehreren ersten Stator-Blechelemente (232) sich in Umfangsrichtung (U) mit einem Bogenwinkel um mindestens 2,5° und maximal um 7,5°, vorzugsweise um 5° ± 1°, erstrecken; und/oder
- das mindestens ein zweite Stator-Blechelement (233) sich in Umfangsrichtung (U) mit einem Bogenwinkel um mindestens 7,5° und maximal um 12,5°, vorzugsweise um 10° ± 1°, erstreckt; und/oder
- vorzugsweise umfassend mindestens zwei Stator-Blechstapel (230), wobei benachbarte Stator-Blechstapel (230) der mindestens zwei Stator-Blechstapel (230) in der Axialrichtung (A) beabstandet zueinander angeordnet sind.

5. Statorsegment (200) eines Stators (109) eines Generators (1), insbesondere eines segmentierten Stators (109) eines segmentierten Generators (1), für eine Windenergieanlage (100) umfassend
- ein Spulenträgersegment (210) mit einer ringförmigen oder teilringförmigen Geometrie und einer Stator-Umfangsstruktur (211); und
- mindestens ein Stator-Blechpaket (220), vorzugsweise ein Stator-Blechpaket (220) nach einem der vorhergehenden Ansprüche 2-4, das zur Aufnahme mindestens einer Spuleneinheit (260) ausgebildet ist und an der Stator-Umfangsstruktur (211) angeordnet ist;
- eine Befestigungsvorrichtung (400) zur Befestigung des mindestens ein Stator-Blechpakets (220) an dem Spulenträgersegment (210),
**dadurch gekennzeichnet, dass**
- die Befestigungsvorrichtung (400) als Klemmvorrichtung ausgebildet ist zur kraft- und/oder formschlüssigen Verbindung des mindestens einen Stator-Blechpakets (220) an dem Spulenträgersegment.

6. Statorsegment (200) nach dem vorhergehenden Anspruch,
wobei bevorzugt
- in der Umfangsrichtung (U) benachbart angeordnete Stator-Blechpakete an der Stator-Umfangsstruktur (211) mit einem Blechpaketabstand (P) zueinander beabstandet angeordnet sind; wobei bevorzugt
∘ der Blechpaketabstand (P) dem Blechstapelabstand (S) entspricht; oder
∘ der Blechpaketabstand (P) größer ist als der Blechstapelabstand (S); oder
∘ der Blechpaketabstand (P) kleiner ist als der Blechstapelabstand (S); und/oder
die Befestigungsvorrichtung (400) umfassend:
- mindestens eine erste Klemmleiste (401), insbesondere eine trapezförmige Klemmleiste, und/oder mindestens eine zweite Klemmleiste (402), insbesondere eine teiltrapezförmige Klemmleiste, zur kraft- und/oder formschlüssigen Befestigung der Befestigungsvorrichtung (400) an dem mindestens einen Stator-Blechpaket (220); wobei vorzugsweise die erste Klemmleiste (401) von der zweiten Klemmleiste (402) verschieden ist; und/oder
- die mindestens eine erste und/oder zweite Klemmleiste (401, 402) mindestens eine Kontaktfläche aufweist zur Befestigung der ersten und/oder zweiten Klemmleiste (401, 402) an dem mindestens einen Stator-Blechpaket (220); wobei vorzugsweise die Kontaktfläche eine oder mehrere punkt- und/oder linienförmige Kontakterhebungen aufweist, die ausgebildet sind, eine Klemmverbindung mit dem Stator-Blechpaket (220) über einen Punkt- und/oder Linienkontakt herzustellen; und/oder
- einen Befestigungsanschluss (420) zur Befestigung der Befestigungsvorrichtung (400) an dem Spulenträgersegment (210), insbesondere an der Stator-Umfangsstruktur (211); und/oder
- der Befestigungsanschluss (420) mindestens ein Spannelement (421) umfasst zur kraftschlüssigen und/oder formschlüssigen Verbindung der mindestens einen ersten und/oder zweiten Klemmleiste (401, 402) an dem Spulenträgersegment (210), insbesondere an der Stator-Umfangsstruktur (211); und/oder
- mindestens ein Dämpferelement (430) zur Anordnung zwischen der Befestigungsvorrichtung (400), insbesondere der mindestens einen ersten und/oder zweiten Klemmleiste (401, 402), und dem Stator-Blechpaket (220); und/oder
das mindestens eine Stator-Blechpaket (220) umfassend:
- mindestens eine erste Befestigungsnut (411), insbesondere eine trapezförmige Befestigungsnut, und/oder mindestens eine zweite Befestigungsnut (412), insbesondere eine teiltrapezförmige Befestigungsnut, zur Aufnahme der Befestigungsvorrichtung (400), insbesondere zur Aufnahme jeweils einer ersten und/oder zweiten Klemmleiste (401, 402) der mindestens einen ersten und/oder zweiten Klemmleiste; wobei vorzugsweise die erste Befestigungsnut (411) von der zweiten Befestigungsnut (412) verschieden ist; wobei
- die mindestens eine erste und/oder zweite Befestigungsnut (411, 412) vorzugsweise mindestens eine Nutwand als Kontaktfläche zur Befestigung der Befestigungsvorrichtung (400) an der mindestens einen ersten und/oder zweiten Befestigungsnut (411, 412) aufweist; wobei vorzugsweise die Nutwand eine oder mehrere punkt- und/oder linienförmige Kontakterhebungen aufweist, die ausgebildet sind, eine Klemmverbindung mit der Befestigungsvorrichtung (400) über einen Punkt- und/oder Linienkontakt herzustellen.

7. Stator (109) eines Generators (1), insbesondere eines segmentierten Generators (1), einer Windenergieanlage (100), umfassend ein ringförmig ausgebildetes Statorsegment (200) nach einem der vorhergehenden Ansprüche 5-6 oder mehrere teilringförmig ausgebildete Statorsegmente (200) nach einem der vorhergehenden Ansprüche 5-6, die ringförmig angeordnet sind.

8. Rotorsegment (300) eines Rotors (106) eines Generators (1), insbesondere eines segmentierten Rotors (106) eines segmentierten Generators (1), für eine Windenergieanlage (100) umfassend
- ein Magnetträgersegment (310) mit einer ringförmigen oder teilringförmigen Geometrie und einer Rotor-Innenumfangsfläche (320), und
- mindestens ein Rotor-Blechpaket (325), das zur Aufnahme mindestens einer Magneteinheit (330) ausgebildet ist und an der Rotor-Innenumfangsfläche (320) angeordnet ist;
- mindestens eine Magneteinheit (330), die an dem Rotor-Blechpaket (325) angeordnet ist,
**dadurch gekennzeichnet, dass**
- die mindestens eine Magneteinheit (330) stoffschlüssig mit dem Rotor-Blechpaket (325) verbunden ist, wobei vorzugsweise eine Vergussmasse (V), die die Magneteinheit (330) zumindest teilweise umschließt, die Magneteinheit (330) mit dem Rotor-Blechpaket (325) verbindet.

9. Rotorsegment (300) nach dem vorhergehenden Anspruch, umfassend mindestens eine Magnetabdeckungsvorrichtung (333), die mit dem Rotor-Blechpaket (325) verbunden ist, wobei jeweils zwischen einer Magnetabdeckungsvorrichtung (333) und dem Rotor-Blechpaket (325) eine Magneteinheit (330) angeordnet ist; wobei insbesondere das Rotor-Blechpaket (325) mindestens eine erste und/oder zweite Klemmnut (326, 327) aufweist zur kraft- und/oder formschlüssigen Verbindung der Magnetabdeckungsvorrichtung (333) an dem Rotor-Blechpaket (325), wobei vorzugsweise die erste Klemmnut (326) von der zweiten Klemmnut (327) verschieden ist.

10. Rotorsegment (300) nach einem der vorhergehenden Ansprüche 8-9, wobei die mindestens eine Magneteinheit (330) mindestens einen Magnetblock (332) umfasst, insbesondere einen quaderförmigen Magnetblock (332) umfasst, wobei der Magnetblock (332) zumindest auf einer Magnetblockseite Nuten aufweist zur Verteilung der Vergussmasse (V) zwischen dem Magnetblock (332) und der Rotor-Innenumfangsfläche;
wobei vorzugsweise:
- der mindestens einen Magnetblock (332) eine Axialnut in einer Axialrichtung (A) und/oder eine Umfangsnut in einer Umfangsrichtung (U) und/oder eine Diagonalnut, die diagonal zu der Axialrichtung (A) und der Umfangsrichtung (U) verläuft, aufweist; und/oder
- umfassend mehrere Magneteinheiten (330), die an der Rotor-Innenumfangsfläche (320) in der Umfangsrichtung (U) beabstandet zueinander angeordnet sind, insbesondere äquidistant angeordnet sind; und/oder
- in der Axialrichtung (A) zwei oder mehrere Magneteinheiten (330) der mehreren Magneteinheiten (330) beabstandet zueinander angeordnet sind, wobei die in der Axialrichtung (A) benachbart angeordneten Magneteinheiten (330) einen Umfangsspalt (340) mit einer Spaltbreite definieren; und/oder
- die Magneteinheiten (330) eine, zwei oder mehr Magnetreihen (331) umfassen, die vorzugsweise in der Umfangsrichtung (U) zueinander beabstandet, insbesondere äquidistant, angeordnet sind; und/oder
- eine Magnetreihe (331) einen oder mehrere Magnetblöcke (332) umfasst, die vorzugsweise in der Axialrichtung (A) nebeneinander angeordnet sind.

11. Rotorsegment (300) nach einem der vorhergehenden Ansprüche 8-10, wobei das Rotor-Blechpaket (325)
- stoffschlüssig, insbesondere mit einer Schweißverbindung, mit dem Magnetträgersegment (310) verbunden ist; und/oder
- an einer Rotor-Blechpaketinnenumfangsfläche mindestens einen Vergussmassekanal (K) aufweist, wobei vorzugsweise der mindestens eine Vergussmassekanal (K) als Nut ausgebildet ist, wobei insbesondere der mindestens eine Vergussmassekanal (K) einen Axialkanal in einer Axialrichtung (A) und/oder einen Umfangskanal in einer Umfangsrichtung (U) und/oder einen Diagonalkanal, der diagonal zu der Axialrichtung (A) und der Umfangsrichtung (U) verläuft, aufweist.

12. Rotor (106) eines Generators (1), insbesondere eines segmentierten Generators (1), einer Windenergieanlage (100), umfassend ein ringförmig ausgebildetes Rotorsegment (300) nach einem der vorhergehenden Ansprüche 8-11 oder mehrere teilringförmig ausgebildete Rotorsegmente (300) nach einem der vorhergehenden Ansprüche 8-11, die ringförmig angeordnet sind.

13. Windenergieanlage (100) umfassend einen Generator (1) nach Anspruch 1.

14. Verfahren zur Herstellung eines Rotorsegments (300), insbesondere eines Rotorsegments (300) nach einem der vorhergehenden Ansprüche 8-11, eines Rotors (106) eines Generators (1), insbesondere eines segmentierten Rotors (106) eines segmentierten Generators (1), für eine Windenergieanlage (100), **gekennzeichnet durch** die Schritte:
- Bereitstellen eines Magnetträgersegments (310) mit einer ringförmigen oder teilringförmigen Geometrie und einer Rotor-Innenumfangsfläche (320), und
- Bereitstellen von mindestens einem Rotor-Blechpaket (325), das zur Aufnahme mindestens einer Magneteinheit (330) ausgebildet ist und an der Rotor-Innenumfangsfläche angeordnet ist; und
- Bereitstellen mindestens einer Magneteinheit (330) mit mindestens einem Magnetblock (332); und
- Anordnen der mindestens einen Magneteinheit (330) an dem Rotor-Blechpaket (325); und
- stoffschlüssiges Verbinden der mindestens einen Magneteinheit (330) an dem Rotor-Blechpaket (325).

15. Verfahren nach dem vorhergehenden Anspruch, wobei
- der Schritt des stoffschlüssigen Verbindens der mindestens einen Magneteinheit (330) an dem Rotor-Blechpaket (325) folgenden Schritt umfasst:
o Vergießen der mindestens einen Magneteinheit (330) an dem Rotor-Blechpaket (325), so dass eine Vergussmasse (V) die Magneteinheit (330) zumindest teilweise umschließt; und/oder
das Verfahren ferner folgende Schritte vorzugsweise umfasst:
- Bereitstellen mindestens einer Magnetabdeckungsvorrichtung (333); und/oder
- Bereitstellen eines Montagehilfswerkzeugs (500), wobei vorzugsweise das Montagehilfswerkzeug (500) aus Stahl besteht oder dieses umfasst, und wobei vorzugsweise das Montagehilfswerkzeug (500) eine Negativform der mindestens einen Magnetabdeckungsvorrichtung (333) und oder des Rotor-Blechpakets, insbesondere der Rotor-Blechpaketinnenumfangsfläche, ist; und/oder
- Befestigen des mindestens einen Rotor-Blechpakets (325) an der Rotor-Innenumfangsfläche (320) des Magnetträgersegments (310); und/oder
- Befestigen der mindestens einen Magnetabdeckungsvorrichtung (333) an dem Rotor-Blechpaket (325); und/oder
- Anordnen des Montagehilfswerkzeugs (500) an dem Magnetträgersegment (310), so dass das Montagehilfswerkzeug die mindestens eine Magnetabdeckungsvorrichtung (333) und/oder das mindestens eine Rotor-Blechpaket (325) umschließt; und/oder
- Einführen des mindestens einen Magnetblocks (332) der mindestens einen Magneteinheit (330) in die mindestens eine Magnetabdeckungsvorrichtung (333); und/oder
- Vergießen zumindest der mindestens einen Magnetabdeckungsvorrichtung (333) mit dem darin eingeführten mindestens einen Magnetblock (332) und dem Rotor-Blechpaket (325) mit einer Vergussmasse (V), wobei das Vergießen mit der Vergussmasse (V) insbesondere entgegen der Schwerkraft von unten nach oben erfolgt; und/oder
- Aushärten der Vergussmasse (V); und/oder
- Entfernen des Montagehilfswerkzeugs (500).

16. Verwendung eines Montagehilfswerkzeugs (500) zur Herstellung eines Rotorsegments (300), insbesondere zur Herstellung eines Rotorsegments (300) nach einem der vorhergehenden Ansprüche 8-11, vorzugsweise zum Anordnen mindestens einer Magneteinheit (330) an einem Rotor-Blechpaket (325) und zum stoffschlüssigen Verbinden der mindestens einen Magneteinheit (330) an dem Rotor-Blechpaket (325), wobei das des stoffschlüssige Verbinden insbesondere ein Vergießen der mindestens einen Magneteinheit (330) an dem Rotor-Blechpaket (325) ist, so dass eine Vergussmasse (V) die Magneteinheit (330) zumindest teilweise umschließt.
